# EUROPEAN PATENT APPLICATION

(11) **EP 4 622 318 A1**
(43) Date of publication of application: **24.09.2025**
(21) Application number: 22965430.6
(22) Date of filing: 14.11.2022
(51) Int. Cl.: H04W 24/02, H04L 67/12, G01S 17/66, G06V 20/52, G08B 13/196, H04L 67/50, H04Q 9/00, H04W 4/38

(54) **SENSING SERVICE EXECUTION METHOD AND APPARATUS**

(71) Applicant: Beijing Xiaomi Mobile Software Co., Ltd., Beijing 100085 (CN)
(72) Inventor: WANG, Xinli, Beijing 100085 (CN); SHEN, Yang, Beijing 100085 (CN)
(74) Representative: Gunzelmann, Rainer
(86) International application number: PCT/CN2022/131795
(87) International publication number: WO 2024/103237

(57) **Abstract**

Disclosed in the embodiments of the present disclosure are a sensing service execution method and apparatus, which can be applied to the technical field of communications. The method, which is executed by a network function, comprises: when there are a plurality of first sensing service requests for sensing the same sensing information of the same sensing object, executing a task corresponding to a first target sensing service request, wherein the first target sensing service request is one or more of the plurality of first sensing service requests. Therefore, a plurality of first sensing service requests can be combined, and one or more first target sensing service requests can be executed, such that the signaling overhead can be reduced.

## Description

### TECHNICAL FIELD

The disclosure relates to the field of communication technology, and in particular to a method and a device for executing a sensing service.

### BACKGROUND

The wireless sensing technology obtains characteristics of a signal transmission space by analyzing changes during propagation of wireless signals, in order to realize sensing a certain object or an area in the environment. For example, the sensing of people, buildings, vehicles, etc. in the environment is realized via the wireless sensing technology.

In the related art, when receiving a plurality of first sensing service requests from different requesting parties for same sensing information of a same sensing object, a network function executes each first sensing service request. This results in an increase in signaling overhead of the sensing service, which is a problem that needs to be addressed.

### SUMMARY

Embodiments of the disclosure provide a method and a device for executing a sensing service that may fuse a plurality of first sensing service requests to execute one or more first target sensing service requests, thus reducing signaling overhead.

In a first aspect, embodiments of the disclosure provide a method for executing a sensing service. The method is executed by a network function. The method includes: in response to there being a plurality of first sensing service requests for sensing same sensing information of a same sensing object, executing a task corresponding to a first target sensing service request, in which the first target sensing service request includes one or more of the plurality of first sensing service requests.

In the technical solution, when there are the plurality of first sensing service requests for sensing the same sensing information of the same sensing object, the network function executes the task corresponding to the first target sensing service request. The first target sensing service request includes one or more of the plurality of first sensing service requests. Thus, the plurality of first sensing service requests may be fused, so that one or more first target sensing service requests is executed, reducing signaling overhead.

In a second aspect, embodiments of the disclosure provide another method for executing a sensing service. The method is executed by a first device. The method includes: receiving second sensing service request(s) sent by a network function, in which the second sensing service request(s) is sent by the network function upon determining that there are a plurality of first sensing service requests for sensing same sensing information of a same sensing object.

In a third aspect, embodiments of the disclosure provide a communication device. The communication device has a function of realizing some or all of the functions of the network function in the method described in the first aspect. For example, the functions of the communication device may have the functions in some or all embodiments in the disclosure, or may have the functions which implement any one of the embodiments in the disclosure alone. The functions may be realized by hardware or by hardware executing corresponding software. The hardware or software includes one or more units or modules corresponding to the functions described above.

In an implementation, structures of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a processing module, configured to, in response to there being a plurality of first sensing service requests for sensing same sensing information of a same sensing object, execute a task corresponding to a first target sensing service request, in which the first target sensing service request includes one or more of the plurality of first sensing service requests.

In a fourth aspect, embodiments of the disclosure provide another communication device. The communication device has a function of realizing some or all of the functions of the first device in the method described in the second aspect. For example, the functions of the communication device may have the functions in some or all embodiments in the disclosure, or may have the functions which implement any one of the embodiments in the disclosure alone. The functions may be realized by hardware or by hardware executing corresponding software. The hardware or software includes one or more units or modules corresponding to the functions described above.

In an implementation, structures of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to receive second sensing service request(s) sent by a network function, in which the second sensing service request(s) is sent by the network function upon determining that there are a plurality of first sensing service requests for sensing same sensing information of a same sensing object.

In a fifth aspect, embodiments of the disclosure provide a communication device. The communication device includes a processor. When the processor calls a computer program in a memory, the method according to the first aspect is performed.

In a sixth aspect, embodiments of the disclosure provide a communication device. The communication device includes a processor. When the processor calls a computer program in a memory, the method according to the second aspect is performed.

In a seventh aspect, embodiments of the disclosure provide a communication device. The communication device includes a processor and a memory. The memory is stored with a computer program; and the processor is configured to execute the computer program stored in the memory, so that the communication device performs the method according to the first aspect.

In an eighth aspect, embodiments of the disclosure provide a communication device. The communication device includes a processor and a memory. The memory is stored with a computer program; and the processor is configured to execute the computer program stored in the memory, so that the communication device performs the method according to the second aspect.

In a ninth aspect, embodiments of the disclosure provide a communication device. The communication device includes a processor and an interface circuit. The interface circuit is configured to receive code instructions and transmit the code instructions to the processor; and the processor is configured to run the code instructions so that the method according to the first aspect is performed.

In a tenth aspect, embodiments of the disclosure provide a communication device. The communication device includes a processor and an interface circuit. The interface circuit is configured to receive code instructions and transmit the code instructions to the processor; and the processor is configured to run the code instructions so that the method according to the second aspect is performed.

In an eleventh aspect, embodiments of the disclosure provide a system for executing a sensing service. The system includes the communication device according to the third aspect and the communication device according to the fourth aspect, or the system includes the communication device according to the fifth aspect and the communication device according to the sixth aspect, or the system includes the communication device according to the seventh aspect and the communication device as described in the eighth aspect, or the system includes the communication device according to the ninth aspect and the communication device according to the tenth aspect.

In a twelfth aspect, embodiments of the disclosure provide a computer-readable storage medium. The computer-readable storage medium is configured to store instructions used by the network function, which when executed, enable the network function to perform the method according to the first aspect.

In a thirteenth aspect, embodiments of the disclosure provide a computer-readable storage medium. The computer-readable storage medium is configured to store instructions used by the first device, which when executed, enable the first device to perform the method according to the second aspect.

In a fourteenth aspect, embodiments of the disclosure provide a computer program product including a computer program. When the computer program is running on a computer, the computer is caused to perform the method according to the first aspect.

In a fifteenth aspect, embodiments of the disclosure provide a computer program product including a computer program. When the computer program is running on a computer, the computer is caused to perform the method according to the second aspect.

In a sixteenth aspect, embodiments of the disclosure provide a system on chip (SOC). The SOC includes at least one processor and an interface, and is configured to support the network function to perform functions involved in the first aspect, for example, to determine or process at least one of data and information involved in the above methods. In a possible design, the SOC further includes a memory. The memory is configured to save a necessary computer program and data for the network function. The SOC may be constituted by a chip, or may include a chip and other discrete devices.

In a sixteenth aspect, embodiments of the disclosure provide an SOC. The SOC includes at least one processor and an interface, and is configured to support the first device to perform functions involved in the second aspect, for example, to determine or process at least one of data and information involved in the above methods. In a possible design, the SOC further includes a memory. The memory is configured to save a necessary computer program and data for the first device. The SOC may be constituted by a chip, or may include a chip and other discrete devices.

In an eighteenth aspect, embodiments of the disclosure provide a computer program. When the computer program is running on a computer, the computer is caused to perform the method according to the first aspect.

In a nineteenth aspect, embodiments of the disclosure provide a computer program. When the computer program is running on a computer, the computer is caused to perform the method according to the second aspect.

### BRIEF DESCRIPTION OF THE DRAWINGS

In order to explain technical solutions in the embodiments of the disclosure or the related art more clearly, the drawings described in the embodiments of the disclosure or required in the related art will be briefly introduced below.
FIG. 1 is a diagram illustrating an architecture of a communication system according to an embodiment of the disclosure.
FIG. 2 is a diagram illustrating an architecture of a network according to an embodiment of the disclosure.
FIG. 3 is a flow chart illustrating a method for executing a sensing service according to an embodiment of the disclosure.
FIG. 4 is a flow chart illustrating another method for executing a sensing service according to an embodiment of the disclosure.
FIG. 5 is a flow chart illustrating yet another method for executing a sensing service according to embodiments of the disclosure.
FIG. 6 is a flow chart illustrating yet another method for executing a sensing service according to an embodiment of the disclosure.
FIG. 7 is a flow chart illustrating yet another method for executing a sensing service according to an embodiment of the disclosure.
FIG. 8 is a flow chart illustrating yet another method for executing a sensing service according to an embodiment of the disclosure.
FIG. 9 is a flow chart illustrating yet another method for executing a sensing service according to an embodiment of the disclosure.
FIG. 10 is a flow chart illustrating yet another method for executing a sensing service according to an embodiment of the disclosure.
FIG. 11 is a flow chart illustrating yet another method for executing a sensing service according to an embodiment of the disclosure.
FIG. 12 is a flow chart illustrating yet another method for executing a sensing service according to an embodiment of the disclosure.
FIG. 13 is a flow chart illustrating yet another method for executing a sensing service according to an embodiment of the disclosure.
FIG. 14 is a flow chart illustrating yet another method for executing a sensing service according to an embodiment of the disclosure.
FIG. 15 is a flow chart illustrating yet another method for executing a sensing service according to an embodiment of the disclosure.
FIG. 16 is a flow chart illustrating yet another method for executing a sensing service according to an embodiment of the disclosure.
FIG. 17 is a flow chart illustrating yet another method for executing a sensing service according to an embodiment of the disclosure.
FIG. 18 is a flow chart illustrating yet another method for executing a sensing service according to an embodiment of the disclosure.
FIG. 19 is a block diagram illustrating a communication device according to an embodiment of the disclosure.
FIG. 20 is a block diagram illustrating another communication device according to an embodiment of the disclosure.
FIG. 21 is a block diagram illustrating a chip according to an embodiment of the disclosure.

### DETAILED DESCRIPTION

In order to better understand a method and a device for executing a sensing service in embodiments of the disclosure, a communication system to which embodiments of the disclosure are applicable is described below.

Reference will now be made in detail to the exemplary embodiments, examples of which are illustrated in the accompanying figures. When the following description refers to the accompanying figures, the same numerals in different figures refer to the same or similar elements, unless otherwise indicated. The implementations described in the following exemplary embodiments do not represent all implementations consistent with the embodiments of the disclosure. Rather, they are merely examples of devices and methods consistent with some aspects of the disclosure as recited in the appended claims.

Terms used in the disclosure are for the purpose of describing specific embodiments only, and are not intended to limit the disclosure. As used in the disclosure and the appended claims, the singular forms "a/an", "said" and "the" are also intended to include the plural forms, unless the context clearly dictates otherwise. It should also be understood that the term "and/or" as used herein refers to and includes any and all possible combinations of one or more of the associated listed items.

It should be understood that although the disclosure may use the terms first, second, third, etc. to describe various information, the information should not be limited to these terms. These terms are only used to distinguish information of the same type from one another. For example, without departing from the scope of the disclosure, first information may also be called second information, and similarly, second information may also be called first information. Depending on the context, the word "if" as used herein may be interpreted as "in a case that" or "when" or "in response to a determination".

It should be noted that the information (including, but not limited to, user device information, user personal information, etc.), data (including, but not limited to, data used for analysis, stored data, displayed data, etc.) and signals involved in the disclosure are all authorized by the user or fully authorized by the parties. The collection, use and processing of the relevant data requires compliance with the relevant laws, regulations and standards of the relevant countries and regions.

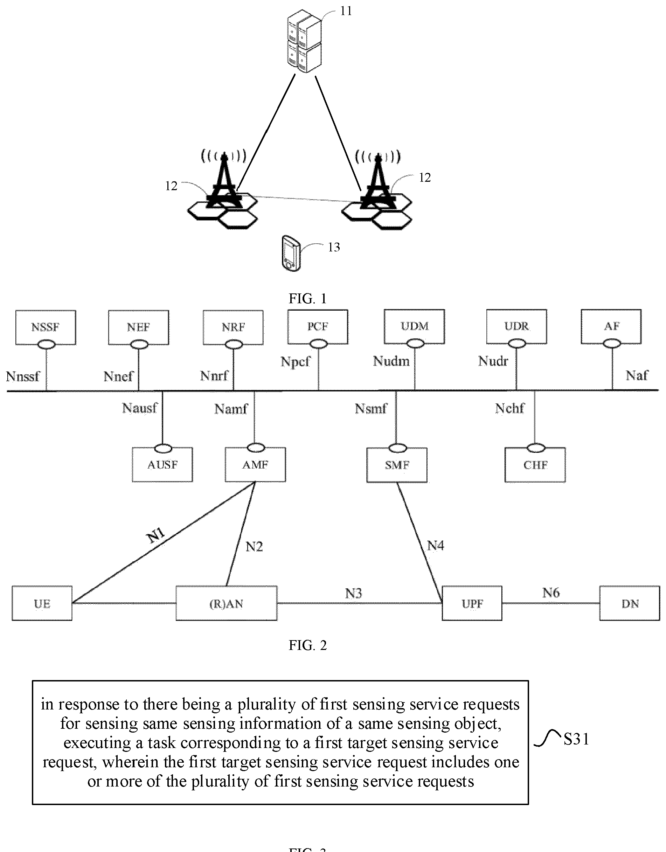

As shown in FIG. 1, an embodiment of the disclosure provides a communication system. The communication system includes: a core network device 11 (e.g., 5th generation core (5GC), evolved packet core (EPC)), an access network device 12 (e.g., next generation node B (gNB), evolved node B (eNB)), and a terminal 13.

The terminal 13, also referred to as User Equipment (UE), mobile station (MS), or mobile terminal (MT), refers to a device providing voice and/or data connectivity to users. For example, the terminal may be a handheld device with wireless connectivity and a vehicle-mounted device. Current examples of terminals include: mobile phones, tablet computers, laptops, palmtop computers, mobile internet devices (MID), wearable devices, virtual reality (VR) devices, augmented reality (AR) devices, wireless terminals in industrial control, wireless terminals in self-driving, wireless terminals in remote medical surgery, wireless terminals in smart grids, wireless terminals in transportation safety, wireless terminals in smart cities, and wireless terminals in smart home, and etc.

The core network device 11 refers to a device in a core network (CN) providing service support for terminals. For example, the core network device includes a 5GC 11 and an EPC 12. Some core network devices include: an access and mobility management function (AMF), a session management function (SMF), and user plane function (UPF). In particular, the AMF is responsible for access management and mobility management of terminals. The SMF is responsible for session management, such as session establishment for users, and etc. The UPF may be a user plane functional entity, primarily responsible for connecting to external networks.

The access network device 12 refers to a radio access network (RAN) node (or device) connecting the terminal to a wireless network, also referred to as a base station. For example, the access network device includes a gNB and an eNB. Current examples of RAN nodes include: a gNB, an eNB, a transmission reception point (TRP), a radio network controller (RNC), a node B (NB), a base station controller (BSC), a base transceiver station (BTS), a home base station (e.g., home evolved node B (HeNB) or home node B (HNB)), a base band unit (BBU), or a wireless fidelity (Wi-Fi) access point (AP). Further, under a certain network architecture, the access network device may include a centralized unit (CU), distributed units (DUs), or a RAN device integrating both CU and DUs. In the RAN device including the CU and the DUs, protocol layers are split logically: some protocol layer functions are centrally controlled by the CU, while remaining or all protocol layer functions are distributed to DUs centrally controlled by the CU.

It can be understood that, the communication system described in embodiments of the disclosure is intended to explain technical solutions of embodiments of the disclosure more clearly, and does not constitute a limitation to the technical solutions provided by embodiments of the disclosure. Those skilled in the art know that, with evolution of a system architecture and emergence of a new business scenario, the technical solutions provided in embodiments of the disclosure are equally applied to similar technical problems.

Referring to FIG. 2, FIG. 2 is a diagram illustrating an architecture of a network according to embodiments of the disclosure. For example, the network architecture may be a 5G network architecture. The 5G network includes: (radio) access network ((R)AN) equipment, a user plane function (UPF), an access and mobility management function (AMF), a session management function (SMF), an authentication server function (AUSF), a network slice selection function (NSSF), a network exposure function (NEF), a network repository function (NRF), a policy control function (PCF), an unified data management (UDM), an unified data repository (UDR), an application function (AF), or a charging function (CHF).

It should be noted that FIG. 2 only exemplarily illustrates partial network elements or entities in the 5G network. The 5G network may further include network elements or entities not illustrated in FIG. 2, such as a network data analytics function (NWDAF). The names of network elements or entities in the 5G network illustrated in FIG. 2 may remain unchanged or be modified in future communication systems (e.g., 6G communication systems), which is not specifically limited in the embodiments of the disclosure.

The AMF, as a control plane network element provided by operator networks, is responsible for access control and mobility management of terminals accessing the operator network, including functions such as mobility status management, allocation of temporary user identifiers, and user authentication/authorization.

The SMF, as a control plane network element provided by operator networks, manages a protocol data unit (PDU) session of the terminal. The PDU session constitutes a channel for PDU transmission, through which the terminal exchanges PDUs with a data network (DN). The SMF handles PDU session establishment, maintenance, and termination. The SMF includes session-related functions such as session management (e.g., session setup/modification/release including tunnel maintenance between UPF and RAN), UPF selection/control, service and session continuity (SSC) mode selection, and roaming.

The UPF, as a gateway provided by operators, is an interface between operator networks and DNs. The UPF includes user plane related functions such as packet routing and transmission, packet detection, traffic usage reporting, quality of service (QoS) handling, legitimate listening, uplink packet detection, and downlink data storage.

The PCF, as a control plane function provided by operators, supplies PDU session policies to the SMF. The policies may include charging-related policies, QoS-related policies, and authorization-related policies.

The UDM, as a control plane network element provided by the operator, is responsible for storing subscriber permanent identifier (SUPI), security context, subscription data and other information of subscribed users in the operator network.

The AF, as a functional network element that provides various business services, is capable of interacting with the core network through other network elements and interacting with a policy management framework for policy management.

The NEF provides frameworks, authentication and interfaces related to network capability openness, facilitating information exchange between the 5G system network function and other network functions.

The UDR is primarily used to store use related subscription data, policy data, structured data for openness, and application data.

In the network architecture, an N1 interface is an interface between the terminal and the AMF. An N2 interface is an interface between the RAN and the AMF, used for sending a non-access stratum (NAS) message, etc. An N3 interface is an interface between the (R)AN and the UPF, used for transmitting user plane data, etc. An N4 interface is an interface between the SMF and the UPF, used for transmitting information such as tunnel identification information of N3 connections, data cache indication information, downlink data notification messages, etc. An N6 interface is an interface between the UPF and the DN, used for transmitting the user plane data, etc. In addition, control plane functions such as AUSF, AMF, SMF, NSSF, NEF, NRF, PCF, UDM, UDR, CHF, or AF interact with each other via a service interface. For example, a service interface provided by AUSF to the outside is Nausf; a service interface provided by AMF to the outside is Namf; a service interface provided by SMF to the outside is Nsmf; a service interface provided by NSSF to the outside is Nnssf; a service interface provided by NEF to the outside is Nnef; a service interface provided by NRF to the outside is Nnrf; a service interface provided by PCF to the outside is Npcf; a service interface provided by UDM to the outside is Nudm; a service interface provided by UDR to the outside is Nudr; a service interface provided by CHF to the outside is Nchf; a service interface provided by AF to the outside is Naf. The description of the relevant interfaces may be found in the relevant art and will not be repeated herein.

In addition, the following points are made to facilitate understanding of the embodiments of the disclosure.

First, in embodiments of the disclosure, "indicate" may include indicate directly and indicate indirectly. When describing that a message indicates A, it may include that the message indicates A directly or indicates A indirectly, and it does not necessarily mean that the message carries A. For example, the message may carry other information from which A can be determined.

The information indicated by the message is referred to as the information to be indicated. In a specific implementation, there are various ways to indicate the information to be indicated, such as, but not limited to, directly indicating the information to be indicated, such as indicating the information to be indicated itself or indicating an index of the information to be indicated. Alternatively, the information to be indicated may be indicated indirectly by indicating other information, in which there is a correlation between the other information and the information to be indicated. Alternatively, the information to be indicated may be indicated only in part, and other parts of the information to be indicated may be known or agreed upon in advance. For example, the indication of specific information may also be achieved by utilizing the predefined order of various pieces of information (such as specified in the protocol), thus reducing the indication overhead to a certain extent.

The information to be indicated may be sent together as a whole or may be divided into a plurality of sub-information to be sent separately. A sending period and/or a sending timing of the sub-information may be the same or different. The specific sending method is not limited in the disclosure. In this case, the sending period and/or the sending timing of the sub-information may be predefined, for example, based on a protocol.

Second, the "protocol" involved in the embodiments of the disclosure may refer to a standard protocol in the field of communication. For example, it may include an LTE protocol, an NR protocol, and related protocols used in future communication systems, which is not limited in the disclosure.

Third, the embodiments of the disclosure set forth a plurality of implementations to provide a clear description of the technical solutions of the embodiments of the disclosure. Those skilled in the art may understand that the plurality of embodiments provided in the embodiments of the disclosure may be performed individually, may be performed in combination with the methods of other embodiments in the embodiments of the disclosure, and may be performed by combining a single embodiment or some combined embodiments with a number of methods of other related technologies, which is not limited in the disclosure.

Wireless sensing technologies aim at acquiring information about a remote object and its characteristics without physically contacting it. The perception data of the object and its surrounding can be utilized for analysis, so that meaningful information about the object and its characteristics can be obtained.

Radar (radio detection and ranging) is a widely used wireless sensing technology that uses radio waves to determine the distance (range), angle, or instantaneous linear velocity of objects. There are other sensing technologies including non-RF sensors, which have been used in other areas, e.g. time-of-flight (ToF) cameras, accelerometers, gyroscopes and Lidar.

Integrated Sensing and Communication in a 3GPP 5G system means the sensing capabilities are provided by the same 5G NR wireless communication system and infrastructure as used for communication, and the sensing information could be derived from RF-based and/or non-RF based sensors. In general, it could involve scenarios of communication assisted sensing, e.g. where 5G communication system provides sensing services, or sensing assisted communication, e.g. when sensing information related to the communication channel or environment is used to improve the communication service of the 5G system itself e.g. the sensing information can be used to assist radio resource management, interference mitigation, beam management, mobility, etc.

Other example use cases to study of 5GS to provide communication assisted sensing services are as follows.

Environment Real-time monitoring: Using wireless signals to reconstruct the environment map to further improve positioning accuracy and enable environment related applications, such as realizing an array of real-time monitoring related applications including dynamic 3D map for driving assistance, pedestrian flow statistics, intrusion detection, traffic detection and etc.

Autonomous vehicles/UAV: Autonomous vehicles/UAV applications have some common functional requirements. For example, Autonomous vehicles/UAV shall support Detect and Avoid (DAA) to avoid obstacles. Meanwhile, Autonomous vehicles/UAV shall have the capability to monitor path information, like selecting routes, complying with traffic regulations.

Air pollution monitoring: The quality of the received wireless signal displays different attenuation characteristics with changes in air humidity, air particulate matter (PM) concentration, carrier frequency and etc., which can be used for weather or air quality detection.

Indoor Health Care and Intrusion Detection. Respiration rate estimation, breathing depth estimation, apnoea detection, elders' vital sign monitoring and indoor intrusion detection can be realized.

Sensing of wireless communication channels and environment could further improve the performance of communication systems. Some examples of sensing assisted communication scenarios are the follows.

Sensing UE's location and channel environment to narrow the beam sweeping range and shorten the beam training time.

Sensing UE' s location, velocity, motion trajectory, and channel environment for beam prediction, and reducing the overhead of beam measurement and the delay of beam tracking.

Sensing UE's property and channel environment to improve the performance of channel estimation.

In the related art, when there are a plurality of first sensing service requests for sensing same sensing information of a same sensing object, the network function executes each first sensing service request. Thus, signaling overhead of the sensing service is increased.

Embodiments of the disclosure provide a method for executing a sensing service. When it is determined that there are the plurality of first sensing service requests for sensing the same sensing information of the same sensing object, the network function determines one or more first target sensing service requests among the plurality of first sensing service requests and executes the task corresponding to the first target sensing service request. Thus, signaling overhead is reduced.

A method and a device for executing a sensing service in the disclosure are further described in combination with attached drawings.

Referring to FIG. 3, FIG. 3 is a flow chart illustrating a method for executing a sensing service according to an embodiment of the disclosure.

As shown in FIG. 3, the method is executed by a network function. The method may include, but is not limited to, the following step S31.

At step S31: in response to there being a plurality of first sensing service requests for sensing same sensing information of a same sensing object, a task corresponding to a first target sensing service request is executed, in which the first target sensing service request includes one or more of the plurality of first sensing service requests.

The network function may be a network function in a 5G core network, or may also be a network function in a future communication system, etc.

The sensing object may, for example, be an object, or an area, etc. The object may be, for example, a terminal. In some examples, when the sensing object is a terminal, the sensing information of the sensing object includes, but is not limited to, one or more of the following: a speed of the terminal, a position of the terminal, a movement trajectory of the terminal, a channel environment of the terminal, and etc. When the sensing object is an area, the sensing information of the sensing object may be the air humidity inside a certain building, the position of an object in a certain area, and etc.

In an embodiment of the disclosure, the network function may determine the first sensing service request, and the sensing object and the corresponding sensing information requested to be sensed by the first sensing service request.

The network function may initiate the first sensing service request, or receive the first sensing service request sent by other devices, so as to determine the first sensing service request, and the sensing object and the corresponding sensing information requested to be sensed by the first sensing service request.

The other devices may, for example, be other network functions in the core network that are different from the network function, or clients external to the core network, or application functions external to the core network, and etc.

In an implementation, the network function initiates the plurality of first sensing service requests. The plurality of first sensing service requests are configured to request a plurality of first sensing service requests for sensing the same sensing information of the same sensing object. Thus, the network function determines that there are the plurality of first sensing service requests for sensing the same sensing information of the same sensing object.

In another implementation, the network function receives one or more first sensing service requests sent by at least one second device. The plurality of first sensing service requests are configured to request for sensing the same sensing information of the same sensing object.

In an embodiment of the disclosure, the network function may receive the plurality of first sensing service requests sent by one or more second devices. The plurality of first sensing service requests are configured to request a plurality of first sensing service requests for sensing the same sensing information of the same sensing object. Thus, the network function determines that there are the plurality of first sensing service requests for sensing the same sensing information of the same sensing object.

In another implementation, the network function receives at least one first sensing service request sent by at least one second device, and initiates at least one first sensing service request. The plurality of first sensing service requests are configured to request for sensing the same sensing information of the same sensing object. Thus, the network function determines that there are the plurality of first sensing service requests for sensing the same sensing information of the same sensing object.

In an embodiment of the disclosure, the second device, for example, may be another network function in the core network that is different from the network function, or a client external to the core network, or an application function external to the core network, and etc.

In some implementations, the network function may receive the first sensing service request sent by the second device via an NEF.

In some possible implementations, in the case that the network function receives the plurality of first sensing service requests sent by at least one second device in a time period and the plurality of first sensing service requests are configured to request for sensing the same sensing information of the same sensing object, the network function may determine that there are the plurality of first sensing service requests for sensing the same sensing information of the same sensing object.

In other possible implementations, in the case that the network function initiates the plurality of first sensing service requests in a time period and the plurality of first sensing service requests are configured to request for sensing the same sensing information of the same sensing object, the network function may determine that there are the plurality of first sensing service requests for sensing the same sensing information of the same sensing object.

A start timing of the time period may be a first time the first sensing service request is received/initiated, or a first time the first sensing service request is received/initiated after the last time period is timed out.

It should be noted that the network function may determine a value of the time period based on a protocol agreement, or may also determine the value of the time period based on an indication from the access network device, which is not limited in embodiments of the present disclosure.

In an embodiment of the disclosure, in the case that the first target sensing service request is sent to the network function by the second device, the network function, after determining sensing data or a sensing result, may send the sensing data or the sensing result to the second device. In this case, the network function may send the sensing data or the sensing result to the second device via the NEF.

It should be noted that in the case that among the plurality of first sensing service requests, in addition to the first target sensing service request, there are other first sensing service requests that are sent by the second device (which may be the same device as the device that sends the first target sensing service request, or may be a different device), although the network function executes the task corresponding to the first target sensing service request and obtains the sensing data or the sensing result, the network function may also, in response to the other first sensing service request sent by the second device, send the sensing data or the sensing result to the second device. Thus, the network function may execute the sensing service of the second device.

In an embodiment of the disclosure, in response to the plurality of first sensing service requests satisfying a first condition, the task corresponding to the first target sensing service request is executed. The first condition includes at least one of: sensing information of sensing objects in the plurality of first sensing service requests all satisfying a privacy setting requirement, data processing methods indicated by the plurality of first sensing service requests being identical, or first devices indicated by the plurality of first sensing service requests being identical.

In some embodiments, in the case that the network function determines that there are the plurality of first sensing service requests for sensing the same sensing information of the same sensing object and the sensing information of sensing objects in the plurality of first sensing service requests satisfy the privacy setting requirement, the network function may determine one first target sensing service request among the plurality of first sensing service requests and execute the task corresponding to the first target sensing service request.

In an embodiment of the disclosure, the network functionality may determine the privacy setting requirement of the sensing information of the sensing object. The privacy setting requirement of the sensing information of the sensing object may be understood as the sensing information of the sensing object being allowed to be sensed by certain requestors, or not being allowed to be sensed by certain requestors.

In the case that the sensing object is a terminal, the terminal may send the privacy setting requirement of the terminal to the network function and store the privacy setting requirement in the network function, e.g., in a UDM.

It may be understood that in the case that the network function is not the UDM, the network function may obtain the privacy setting requirement of the terminal from the UDM.

The first sensing service request may further include information of a first sensing service requesting party (e.g., the network function or the second device). In the case that the network function receives the first sensing service request from the sender, the network function may determine, based on the privacy setting requirements and the information of the first sensing service requesting party, whether the first sensing service request satisfies the privacy setting requirement of the sensing information of the sensing object.

Based on the above, in the case that the network function determines that there are the plurality of first sensing service requests for sensing the same sensing information of the same sensing object and the sensing information of the sensing object in the plurality of first sensing service requests satisfy the privacy setting requirement, the network function may determine one first target sensing service request among the plurality of first sensing service requests and execute the task corresponding to the first target sensing service request. Thus, the plurality of first sensing service requests may be fused, so that one or more first target sensing service requests is executed, reducing signaling overhead.

In an embodiment of the disclosure, in the case that the network function determines that there are the plurality of first sensing service requests for sensing the same sensing information of the same sensing object, the network function may determine one first target sensing service request among the plurality of first sensing service requests.

When the network function determines one first target sensing service request among the plurality of first sensing service requests, the network function may randomly select one of the plurality of first sensing service requests as the first target sensing service request, or may select one of the plurality of first sensing service requests as the first target sensing service request based on a specific condition.

The specific condition may include at least one of: a QoS requirement; time information of the first sensing service request; or a level of a requesting party of the first sensing service request;
In an embodiment, the network function determines, based on required Qos requirements of the plurality of first sensing service requests, a first sensing service request with the highest QoS requirements as the first target sensing service request. The first sensing service request includes the required Qos requirement.

In an embodiment of the disclosure, the network function may determine the required Qos requirements of the plurality of first sensing service requests, and select the first sensing service request with the highest QoS requirement as the first target sensing service request.

In an embodiment of the disclosure, the network function may determine, based on the time information of the first sensing service request, a first sensing service request with the earliest transmission time or the earliest generation time among the plurality of first sensing service requests as the first target sensing service request; or determine a first sensing service request with the latest transmission time or the latest generation time among the plurality of first sensing service requests as the first target sensing service request.

In an embodiment of the disclosure, the network function may determine the target sensing service request based on a level of the sender of the first sensing service request. For example, among the plurality of first sensing service requests, which include the first sensing service requests initiated by the network function and the first sensing service requests sent by the second device, if a level initiated by the network function is higher than a level sent by the second device, the first sensing service requests initiated by the network function are selected in priority, or if a level sent by the second device is higher than a level initiated by the network function, the first sensing service requests sent by the second device are selected in priority. Further, in the case that there are the plurality of first sensing service requests initiated by the network function, one first sensing service request randomly selected, or the first sensing service request initiated first, or the last sensing service request initiated last, may be determined as the first target sensing service request. Similarly, in the case that there are the plurality of first sensing service requests sent by the second device, one first sensing service request randomly selected, or the first sensing service request sent first, or the last sensing service request sent last, may be determined as the first target sensing service request.

In some embodiments, in the case that the network function determines that there are the plurality of first sensing service requests for sensing the same sensing information of the same sensing object, the network function may determine one first target sensing service request among the plurality of first sensing service requests and execute the task corresponding to the first target sensing service request. This includes: determining a first device and a corresponding sensing data generation policy based on the first target sensing service request; and sending a second sensing service request to the first device. The second sensing service request indicates to determine the sensing data of the sensing information of the sensing object using the sensing data generation policy.

In an embodiment of the disclosure, the network function may determine the first device and the sensing data generation policy based on the first sensing service request.

The first device may be a terminal and/or an access network device.

In an embodiment of the disclosure, in the case that the network function determines the first device and the sensing data generation policy, the network function may send the second sensing service request to the first device. The second sensing service request indicates to determine the sensing data of the sensing information of the sensing object using the sensing data generation policy.

In an embodiment of the disclosure, the sensing data generation policy may indicate a sensing information processing mode to be used by the first device when executing the task corresponding to the first target sensing service request, and a transmission method of the sensing service, and etc.

In some embodiments, the network function receives the sensing data sent by the first device. The sensing data is determined by the first device based on the second sensing service request.

In an embodiment of the disclosure, the network function sends the second sensing service request to the first device, wherein the second sensing service request indicates to determine the sensing data of the sensing information of the sensing object using the sensing data generation policy. In the case that the first device receives the second sensing service request, the first device may determine the sensing data of the sensing information of the sensing object by executing the sensing service using the sensing data generation policy, and send the determined sensing data to the network function.

In some embodiments, in response to receiving the sensing data sent by the plurality of first devices, the network function determines the sensing result by fusing the sensing data.

In an embodiment of the disclosure, in the case that the network function receives the sensing data sent by the plurality of first devices, the network function determines the sensing result by fusing the sensing data.

When fusing the sensing data sent by the plurality of first devices, for example, the sensing data sent by the plurality of first devices may be comprehensively considered, and an error analysis may be performed on sensing data of a certain parameter. This could involve taking a maximum, or a minimum, or an average, etc., and the sensing result may be determined after fusing the sensing data.

Certainly, the above fusion process is only for illustrative purposes. The process of fusing the sensing data in the embodiments of the disclosure may be referred to in the related art, and is not limited in embodiments of the disclosure.

In the case that the fusion mode indicated in the first sensing service request is fusion performed at the network function, the network function may fuse the sensing data sent by the plurality of first devices and determine the sensing result.

It may be understood that the first target sensing service request may indicate obtaining sensing information from a plurality of sources. Based on the above, when executing the task corresponding to the first target sensing service request, the network function may determine the plurality of first devices and the corresponding sensing data generation strategies, and send the corresponding second sensing service request to each first device respectively.

In an embodiment, the network function receives the sensing result sent by one target first device among the plurality of first devices. The sensing result is determined by the target first device through fusing the determined sensing data and the sensing data sent by the other first devices. The sensing data is determined by the first device based on the second sensing service request.

In an embodiment of the disclosure, the network function may receive a sensing result sent by a target first device among the plurality of first devices. The target first device may determine the sensing result through fusing the determined sensing data and the sensing data sent by the other first devices, and send the sensing result to the network function.

In some embodiments, the first target sensing service request includes at least one of: device information for executing the sensing service, in which the device information for executing the sensing service indicates the first device; or first indication information, in which the first indication information indicates fusion of sensing data from different first devices.

In an embodiment of the disclosure, the first target sensing service request includes the device information for executing the sensing service. The device information for executing the sensing service indicates the first device.

In some embodiments, in response to the first target sensing service request including the device information for executing the sensing service, the network function determines the first device based on the first target sensing service request.

In an embodiment of the disclosure, in the case that the first target sensing service request includes the device information for executing the sensing service and the device information for executing the sensing service indicates the first device, the first device may be determined. In addition, in the case that the device information for executing the sensing service indicates the plurality of first devices, the plurality of first devices may be determined.

In an embodiment of the disclosure, the first target sensing service request includes first indication information.

In some embodiments, the first indication information indicates at least one of: fusion at the network function; fusion at the first device; or no fusion.

In an embodiment of the disclosure, the first indication information indicates fusion at the network function.

In some embodiments, in response to the first target sensing service request including the first indication information, the first indication information indicating fusion at the network function and receiving the sensing data sent by the first device, the network function determines the sensing result by fusing the sensing data.

In an embodiment of the disclosure, in the case that the first target sensing service request includes the first indication information, the first indication information indicates fusion at the network function and the sensing data sent by the first device is received, the network function may determine the sensing result by fusing the sensing data.

In an embodiment of the disclosure, the first indication information indicates fusion at the first device.

In some embodiments, in the case that the first target sensing service request includes the first indication information, and the first indication information indicates fusion at the first device, the network function sends second indication information to the first device. The second indication information indicates the target first device to fuse the sensing data measured by each first device. The target first device includes one or more of the first devices.

In an embodiment of the disclosure, in the case that the first target sensing service request includes the first indication information, and the first indication information indicates fusion at the first device, the network function may send the indication information to the first device. The indication information indicates to fuse the sensing data at one target first device.

Based on the above, the first device may determine the target first device based on the indication information, and send the sensing data to the target first device for fusion after obtaining the sensing data.

In an embodiment of the disclosure, the first indication information indicates no fusion.

In the case that the first indication information indicates no fusion, the network function executes the task corresponding to the first target sensing service request. The first target sensing service request includes the first indication information and indicates no fusion. In this case, the network function sends the second sensing service request to the first device and may receive the sensing data sent by the first device.

Further, in the case that the first target sensing service request is sent by the second device, the network function, after receiving the sensing data sent by the first device, may send the sensing data directly to the second device for fusion at the second device.

In some embodiments, in response to receiving the sensing data, the network function sends the sensing data to the second device.

It may be understood that in the case that the first target sensing service request is sent by the second device, the network function, after receiving the sensing data sent by a target sensing executing device, may send the sensing data to the second device. In this case, the network function may send the sensing data to the second device via the NEF.

Further, in the case that there is a specific first sensing service request sent by the second device in addition to the first target sensing service request among the plurality of first sensing service requests, the network function, after receiving the sensing data, may also send the sensing data to the second device that sends the specific first sensing service request. Thus, the second device that sends the specific first sensing service request may obtain the sensing data of the specific first sensing service request, so as to complete the sensing service.

In some embodiments, in response to receiving the sensing data, and the first target sensing service request including the first indication information indicating no fusion or fusion at the second device, the network function sends the sensing data to the second device.

It may be understood that in the case that the first target sensing service request is sent by the second device, the network function, after receiving the sensing data sent by the target sensing executing device, may directly send the sensing data to the second device if the first target sensing service request includes the first indication information and the first indication information indicates no fusion. In this case, the network function may send the sensing data to the second device via the NEF.

Further, in the case that there is a specific first sensing service request sent by the second device in addition to the first target sensing service request among the plurality of first sensing service requests, the network function, after receiving the sensing data, may also send the sensing data to the second device that sends the specific first sensing service request. Thus, the second device that sends the specific first sensing service request may obtain the sensing data of the specific first sensing service request, so as to complete the sensing service.

In some embodiments, in response to receiving the sensing result, the network function sends the sensing result to the second device.

It may be understood that in the case that the first target sensing service request is sent by the second device, the network function, after receiving the sensing result sent by the target sensing executing device, may send the sensing result to the second device. In this case, the network function may send the sensing result to the second device via the NEF.

Further, in the case that there is a specific first sensing service request sent by the second device in addition to the first target sensing service request among the plurality of first sensing service requests, the network function, after determining the sensing result, may also send the sensing result to the second device that sends the specific first sensing service request. Thus, the second device that sends the specific first sensing service request may obtain the sensing result of the specific first sensing service request, so as to complete the sensing service.

In some embodiments, in response to receiving the sensing result, the network function sends the sensing result to the second device.

It may be understood that in the case that the first target sensing service request is sent by the second device, the network function, after determining the sensing result, may send the sensing result to the second device. In this case, the network function may send the sensing result to the second device via the NEF.

Further, in the case that there is a specific first sensing service request sent by the second device in addition to the first target sensing service request among the plurality of first sensing service requests, the network function, after determining the sensing result, may also send the sensing result to the second device that sends the specific first sensing service request. Thus, the second device that sends the specific first sensing service request may obtain the sensing result of the specific first sensing service request, so as to complete the sensing service.

In the implementation of embodiments of the disclosure, in response to determining that there are the plurality of first sensing service requests for sensing the same sensing information of the same sensing object, the network function determines the first target sensing service request among the plurality of first sensing service requests and executes the task corresponding to the first target sensing service request. Thus, the plurality of first sensing service requests may be fused and one or more first target sensing service requests may be executed, and signaling overhead may be reduced.

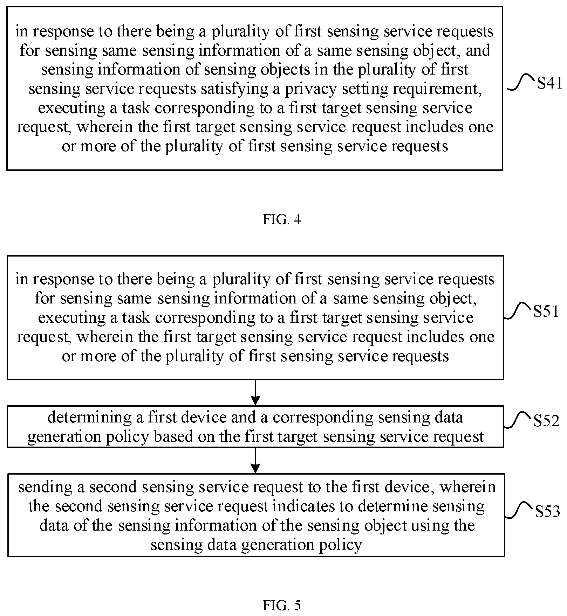

Referring to FIG. 4, FIG. 4 is a flow chart illustrating another method for executing a sensing service according to an embodiment of the disclosure.

As shown in FIG. 4, the method is executed by a network function. The method may include, but is not limited to, the following step S41.

At step S41: in response to there being a plurality of first sensing service requests for sensing same sensing information of a same sensing object, and sensing information of sensing objects in the plurality of first sensing service requests satisfying a privacy setting requirement, a task corresponding to a first target sensing service request is executed, in which the first target sensing service request includes one or more of the plurality of first sensing service requests.

The network function, the sensing object, and the sensing information may be referred to the relevant descriptions in the embodiments described above, and will not be repeated herein.

In an embodiment of the disclosure, the network function may determine the privacy setting requirement of the sensing information of the sensing object. The privacy setting requirement of the sensing information of the sensing object may be understood as the sensing information of the sensing object being allowed to be sensed by certain requestors, or not being allowed to be sensed by certain requestors.

In the case that the sensing object is a terminal, the terminal may send the privacy setting requirement of the terminal to the network function and store the privacy setting requirement in the network function, e.g., in a UDM.

It may be understood that in the case that the network function is not the UDM, the network function may obtain the privacy setting requirement of the terminal from the UDM.

The first sensing service request may further include information of a sender of the first sensing service request (e.g., the network function itself or the second device). In the case that the network function receives the first sensing service request from the sender, the network function may determine, based on the privacy setting requirement and the information of the sender, whether the first sensing service request satisfies the privacy setting requirement of the sensing information of the sensing object.

Based on the above, in the case that the network function determines that there are the plurality of first sensing service requests for sensing the same sensing information of the same sensing object and the sensing information of sensing objects in the plurality of first sensing service requests satisfy the privacy setting requirement, the network function may determine the first target sensing service request among the plurality of first sensing service requests and execute the task corresponding to the first target sensing service request. Thus, the plurality of first sensing service requests may be fused and one or more first target sensing service requests may be executed, and signaling overhead may be reduced.

In the implementation of embodiments of the disclosure, in response to determining that there are the plurality of first sensing service requests for sensing the same sensing information of the same sensing object and the sensing information of sensing objects in the plurality of first sensing service requests satisfying the privacy setting requirement, the network function determines the first target sensing service request among the plurality of first sensing service requests and executes the task corresponding to the first target sensing service request. Thus, the plurality of first sensing service requests may be fused and one or more first target sensing service requests may be executed, and signaling overhead may be reduced.

Referring to FIG. 5, FIG. 5 is a flow chart illustrating another method for executing a sensing service according to embodiments of the disclosure.

As shown in FIG. 5, the method is executed by a network function. The method may include, but is not limited to, the following steps S51 to S53.

At step S51: in response to there being a plurality of first sensing service requests for sensing same sensing information of a same sensing object, a task corresponding to a first target sensing service request is executed, in which the first target sensing service request includes one or more of the plurality of first sensing service requests.

The relevant description of S51 may be referred to the relevant description in the above embodiments, and will not be repeated herein.

At step S52: a first device and a corresponding sensing data generation policy are determined based on the first target sensing service request.

At step S53: a second sensing service request is sent to the first device, in which the second sensing service request indicates to determine sensing data of the sensing information of the sensing object using the sensing data generation policy.

In an embodiment of the disclosure, the network function may determine the first device and the sensing data generation policy based on the first sensing service request.

The first device may be a terminal and/or an access network device.

In an embodiment of the disclosure, in the case that the network function determines the first device and the sensing data generation policy, the network function may send the second sensing service request to the first device. The second sensing service request indicates to determine the sensing data of the sensing information of the sensing object using the sensing data generation policy, enabling the first device to execute the sensing service and obtain the sensing information.

In the implementation of embodiments of the disclosure, in response to determining that there are the plurality of first sensing service requests for sensing the same sensing information of the same sensing object, the network function determines the first target sensing service request among the plurality of first sensing service requests and executes the task corresponding to the first target sensing service request; determines the first device and the corresponding sensing data generation policy based on the first target sensing service request; and sends the second sensing service request to the first device. The second sensing service request indicates to determine the sensing data of the sensing information of the sensing object using the sensing data generation policy. Thus, the plurality of first sensing service requests may be fused and one or more first target sensing service requests may be executed, and signaling overhead may be reduced.

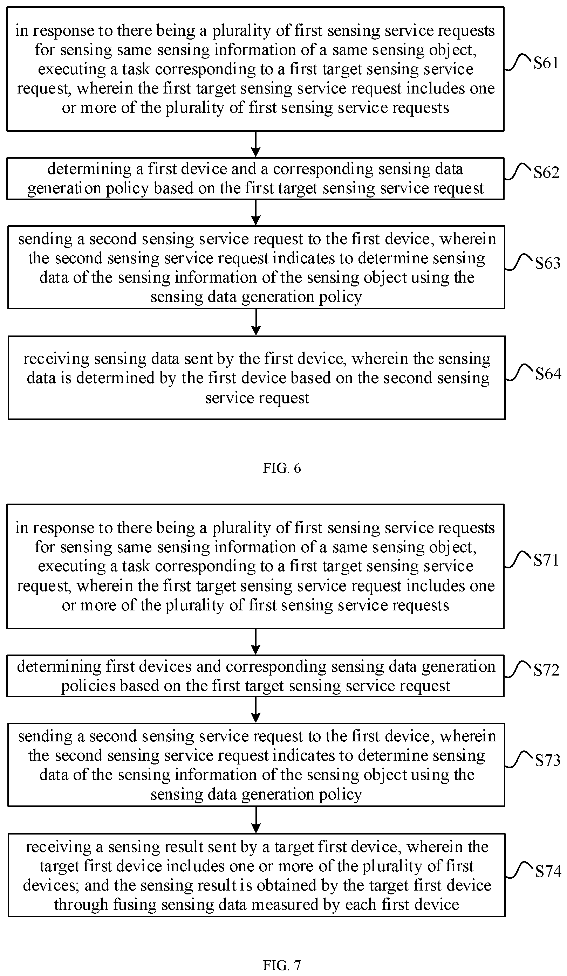

Referring to FIG. 6, FIG. 6 is a flow chart illustrating another method for executing a sensing service according to an embodiment of the disclosure.

As shown in FIG. 6, the method is executed by a network function. The method may include, but is not limited to, the following steps S61 to S64.

At step S61: in response to there being a plurality of first sensing service requests for sensing same sensing information of a same sensing object, a task corresponding to a first target sensing service request is executed, in which the first target sensing service request includes one or more of the plurality of first sensing service requests.

At step S62: a first device and a corresponding sensing data generation policy are determined based on the first target sensing service request.

At step S63: a second sensing service request is sent to the first device, in which the second sensing service request indicates to determine sensing data of the sensing information of the sensing object using the sensing data generation policy.

The relevant description of S61 to S63 may be referred to the relevant description in the above embodiments, and will not be repeated herein.

At step S64: sensing data sent by the first device is received, in which the sensing data is determined by the first device based on the second sensing service request.

In an embodiment of the disclosure, the network function sends the second sensing service request to the first device, the second sensing service request indicating to determine the sensing data of the sensing information of the sensing object using the sensing data generation policy. Based on this, in the case that the first device receives the second sensing service request, the first device may determine the sensing data of the sensing information of the sensing object by executing the sensing service using the sensing data generation policy, and send the determined sensing data to the network function.

In some embodiments, in response to receiving the sensing data sent by the plurality of first devices, the network function determines the sensing result by fusing the sensing data.

In an embodiment of the disclosure, in the case that the network function receives the sensing data sent by the plurality of first devices, the network function determines the sensing result by fusing the sensing data.

In the case that the fusion mode indicated in the first sensing service request is fusion performed at the network function, the network function may determine the sensing result by fusing the sensing data sent by the plurality of first devices.

In the implementation of embodiments of the disclosure, in response to determining that there are the plurality of first sensing service requests for sensing the same sensing information of the same sensing object, the network function determines the first target sensing service request among the plurality of first sensing service requests and executes the task corresponding to the first target sensing service request; determines the first device and the corresponding sensing data generation policy based on the first target sensing service request; sends the second sensing service request to the first device, wherein the second sensing service request indicates to determine the sensing data of the sensing information of the sensing object using the sensing data generation policy; and receives the sensing data sent by the first device, wherein the sending data is determined by the first device based on the second sensing service request. Thus, the plurality of first sensing service requests may be fused and one or more first target sensing service requests may be executed to obtain the sensing data, and signaling overhead may be reduced.

Referring to FIG. 7, FIG. 7 is a flow chart illustrating another method for executing a sensing service according to an embodiment of the disclosure.

As shown in FIG. 7, the method is executed by a network function. The method may include, but is not limited to, the following steps S71 to S74.

At step S71: in response to there being a plurality of first sensing service requests for sensing same sensing information of a same sensing object, a task corresponding to a first target sensing service request is executed, in which the first target sensing service request includes one or more of the plurality of first sensing service requests.

At step S72: first devices and corresponding sensing data generation policies are determined based on the first target sensing service request.

At step S73: a second sensing service request is sent to the first device, in which the second sensing service request indicates to determine sensing data of the sensing information of the sensing object using the sensing data generation policy.

The relevant description of S71 to S73 may be referred to the relevant description in the above embodiments, and will not be repeated herein.

At step S74: a sensing result sent by a target first device is received, in which the target first device includes one or more of the plurality of first devices; and the sensing result is obtained by the target first device through fusing sensing data measured by each first device.

It may be understood that the first target sensing service request may indicate obtaining sensing information from a plurality of sources. Based on this, when executing the task corresponding to the first target sensing service request, the network function may determine the plurality of first devices and the corresponding sensing data generation strategies, and send the corresponding second sensing service request to each first device respectively.

In an embodiment of the disclosure, the network function may receive a sensing result sent by a target first device among the plurality of first devices. The target first device may determine the sensing result through fusing the determined sensing data and the sensing data sent by the other first devices, and send the sensing result to the network function.

In the implementation of embodiments of the disclosure, in response to determining that there are the plurality of first sensing service requests for sensing the same sensing information of the same sensing object, the network function determines one first target sensing service request among the plurality of first sensing service requests and executes the task corresponding to the first target sensing service request; determines the first devices and the corresponding sensing data generation policies based on the first target sensing service request; and sends the second sensing service request to the first device, wherein the second sensing service request indicates to determine the sensing data of the sensing information of the sensing object using the sensing data generation policy; and receives the sensing result sent by one target first device among the plurality of first devices, wherein the sensing result is determined by the target first device through fusing the determined sensing data and the sensing data sent by the other first devices, and the sensing data is determined by the first device based on the second sensing service request. Thus, the plurality of first sensing service requests may be fused, and one or more first target sensing service requests may be executed to obtain the sensing result, and signaling overhead may be reduced.

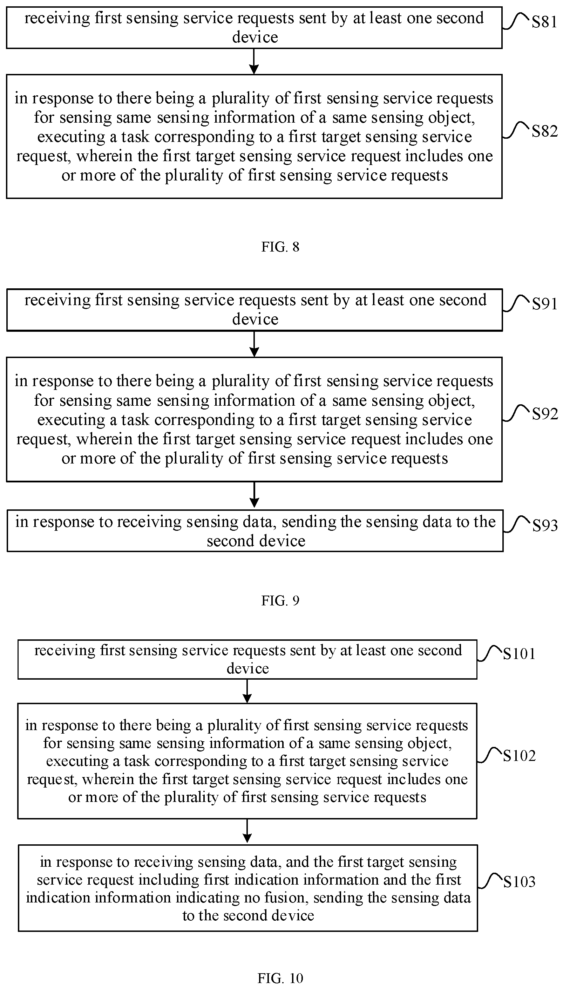

Referring to FIG. 8, FIG. 8 is a flow chart illustrating another method for executing a sensing service according to an embodiment of the disclosure.

As shown in FIG. 8, the method is executed by a network function. The method may include, but is not limited to, the following steps S81 to S82.

At step S81: first sensing service requests sent by at least one second device are received.

In an embodiment of the disclosure, the network function may receive a plurality of first sensing service requests sent by one or more second devices. The plurality of first sensing service requests are configured to request a plurality of first sensing service requests for sensing same sensing information of a same sensing object. Thus, the network function determines that there are the plurality of first sensing service requests for sensing the same sensing information of the same sensing object.

In another implementation, the network function receives at least one first sensing service request sent by the at least one second device, and initiates at least one first sensing service request. The plurality of first sensing service requests are configured to request for sensing the same sensing information of the same sensing object. Thus, the network function determines that there are the plurality of first sensing service requests for sensing the same sensing information of the same sensing object.

The second device, for example, may be another network function in the core network that is different from the network function, or a client external to the core network, or an application function external to the core network, and etc.

In an embodiment of the disclosure, the network function may receive one or more first sensing service requests sent by the at least one second device via an NEF.

At step S82: in response to there being a plurality of first sensing service requests for sensing same sensing information of a same sensing object, a task corresponding to a first target sensing service request is executed, in which the first target sensing service request includes one or more of the plurality of first sensing service requests.

The relevant description of S82 may be referred to the relevant description in the above embodiments, and will not be repeated herein.

In the implementation of embodiments of the disclosure, the network function receives one or more first sensing service requests sent by the at least one second device. The plurality of first sensing service requests are configured to request for sensing the same sensing information of the same sensing object. In response to determining that there are the plurality of first sensing service requests for sensing the same sensing information of the same sensing object, the network function determines the first target sensing service request among the plurality of first sensing service requests and executes the task corresponding to the first target sensing service request. Thus, the plurality of first sensing service requests may be fused and one or more first target sensing service requests may be executed, and signaling overhead may be reduced.

Referring to FIG. 9, FIG. 9 is a flow chart illustrating another method for executing a sensing service according to an embodiment of the disclosure.

As shown in FIG. 9, the method is executed by a network function. The method may include, but is not limited to, the following steps S91 to S92.

At step S91: first sensing service requests sent by at least one second device are received.

At step S92: in response to there being a plurality of first sensing service requests for sensing same sensing information of a same sensing object, a task corresponding to a first target sensing service request is executed, in which the first target sensing service request includes one or more of the plurality of first sensing service requests.

The relevant description of S91 to S92 may be referred to the relevant description in the above embodiments, and will not be repeated herein.

At step S93: in response to receiving sensing data, the sensing data is sent to the second device.

In an embodiment of the disclosure, the network function may determine the first device and the sensing data generation policy based on the first sensing service request. The first device may be a terminal and/or an access network device.

In an embodiment of the disclosure, in the case that the network function determines the first device and the sensing data generation policy, the network function may send a second sensing service request to the first device. The second sensing service request indicates to determine the sensing data of the sensing information of the sensing object using the sensing data generation policy.

The network function may also receive the sensing data determined and sent by the first device based on the second sensing service request, and then send the sensing data to the second device. In this case, the network function may send the sensing data to the second device via an NEF.

Further, in the case that there is a specific first sensing service request sent by the second device in addition to the first target sensing service request among the plurality of first sensing service requests, the network function, after receiving the sensing data, may also send the sensing data to the second device that sends the specific first sensing service request. Thus, the second device that sends the specific first sensing service request may obtain the sensing data of the specific first sensing service request, so as to complete the sensing service.

In the implementation of embodiments of the disclosure, the network function receives one or more first sensing service requests sent by at least one second device. The plurality of first sensing service requests are configured to request for sensing the same sensing information of the same sensing object. In response to determining that there are the plurality of first sensing service requests for sensing the same sensing information of the same sensing object, the network function determines the first target sensing service request among the plurality of first sensing service requests and executes the task corresponding to the first target sensing service request. In response to receiving the sensing data, the network function sends the sensing data to the second device. Thus, the plurality of first sensing service requests may be fused, and one or more first target sensing service requests may be executed to obtain the sensing data and send the sensing data to the second device, thereby reducing signaling overhead.

Referring to FIG. 10, FIG. 10 is a flow chart illustrating another method for executing a sensing service according to an embodiment of the disclosure.

As shown in FIG. 10, the method is executed by a network function. The method may include, but is not limited to, the following steps S101 to S103.

At step S101: first sensing service requests sent by at least one second device are received.

At step S102: in response to there being a plurality of first sensing service requests for sensing same sensing information of a same sensing object, a task corresponding to a first target sensing service request is executed, in which the first target sensing service request includes one or more of the plurality of first sensing service requests.

The relevant description of S101 to S102 may be referred to the relevant description in the above embodiments, and will not be repeated herein.

At step S103: in response to receiving sensing data, and the first target sensing service request including first indication information and the first indication information indicating no fusion, the sensing data is sent to the second device.

In an embodiment of the disclosure, the network function may determine the first device and the sensing data generation policy based on the first sensing service request. The first device may be a terminal and/or an access network device.

In an embodiment of the disclosure, in the case that the network function determines the first device and the sensing data generation policy, the network function may send a second sensing service request to the first device. The second sensing service request indicates to determine the sensing data of the sensing information of the sensing object using the sensing data generation policy.

The network function may also receive the sensing data determined and sent by the first device based on the second sensing service request. In the case that the first target sensing service request includes the first indication information and the first indication information indicates no fusion, the network function may send the sensing data to the second device. In this case, the network function may send the sensing data to the second device via an NEF.

Further, in the case that there is a specific first sensing service request sent by the second device in addition to the first target sensing service request among the plurality of first sensing service requests, the network function, after receiving the sensing data, may also send the sensing data to the second device that sends the specific first sensing service request. Thus, the second device that sends the specific first sensing service request may obtain the sensing data of the specific first sensing service request, so as to complete the sensing service.

In the implementation of embodiments of the disclosure, the network function receives one or more first sensing service requests sent by at least one second device. The plurality of first sensing service requests are configured to request for sensing the same sensing information of the same sensing object. In response to determining that there are the plurality of first sensing service requests for sensing the same sensing information of the same sensing object, the network function determines one first target sensing service request among the plurality of first sensing service requests and executes the task corresponding to the first target sensing service request. In response to receiving the sensing data, and the first target sensing service request including the first indication information and the first indication information indicating no fusion, the network function sends the sensing data to the second device. Thus, the plurality of first sensing service requests may be fused, and one or more first target sensing service requests may be executed to obtain the sensing data and send the sensing data to the second device, thereby reducing signaling overhead.

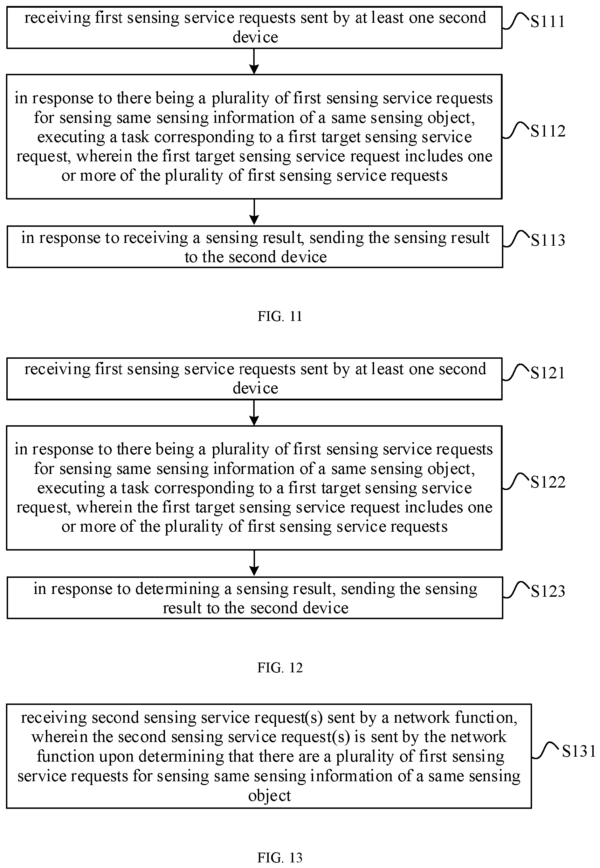

Referring to FIG. 11, FIG. 11 is a flow chart illustrating another method for executing a sensing service according to an embodiment of the disclosure.

As shown in FIG. 11, the method is executed by a network function. The method may include, but is not limited to, the following steps S111 to S113.

At step S111: first sensing service requests sent by at least one second device are received.

At step S112: in response to there being a plurality of first sensing service requests for sensing same sensing information of a same sensing object, a task corresponding to a first target sensing service request is executed, in which the first target sensing service request includes one or more of the plurality of first sensing service requests.

The relevant description of S111 to S112 may be referred to the relevant description in the above embodiments, and will not be repeated herein.

At step S113: in response to receiving a sensing result, the sensing result is sent to the second device.

In an embodiment of the disclosure, the network function may determine the first device and the sensing data generation policy based on the first sensing service request. The first device may be a terminal and/or an access network device.

In an embodiment of the disclosure, in the case that the network function determines the first device and the sensing data generation policy, the network function may send a second sensing service request to the first device. The second sensing service request indicates to determine the sensing data of the sensing information of the sensing object using the sensing data generation policy.

It may be understood that the first target sensing service request may indicate obtaining sensing information from a plurality of sources. Based on this, when executing the task corresponding to the first target sensing service request, the network function may determine the plurality of first devices and the corresponding sensing data generation strategies, and send the corresponding second sensing service request to each first device respectively.

In an embodiment, the network function receives the sensing result sent by one target first device among the plurality of first devices. The sensing result is determined by the target first device through fusing the determined sensing data and the sensing data sent by the other first devices. The sensing data is determined by the first device based on the second sensing service request.

In an embodiment of the disclosure, the network function may receive a sensing result sent by a target first device among the plurality of first devices. The target first device may determine the sensing result through fusing the determined sensing data and the sensing data sent by the other first devices, and send the sensing result to the network function.

The network function may also receive the sensing result sent by the target first device, and then send the sensing result to the second device. In this case, the network function may send the sensing result to the second device via an NEF.

Further, in the case that there is a specific first sensing service request sent by the second device in addition to the first target sensing service request among the plurality of first sensing service requests, the network function, after receiving the sensing result, may also send the sensing result to the second device that sends the specific first sensing service request. Thus, the second device that sends the specific first sensing service request may obtain the sensing result of the specific first sensing service request, so as to complete the sensing service.

In the implementation of embodiments of the disclosure, the network function receives one or more first sensing service requests sent by the at least one second device. The plurality of first sensing service requests are configured to request for sensing the same sensing information of the same sensing object. In response to determining that there are the plurality of first sensing service requests for sensing the same sensing information of the same sensing object, the network function determines one first target sensing service request among the plurality of first sensing service requests and executes the task corresponding to the first target sensing service request. In response to receiving the sensing result, the network function sends the sensing result to the second device. Thus, the plurality of first sensing service requests may be fused, and one or more first target sensing service requests may be executed to obtain the sensing result and send the sensing result to the second device, thereby reducing signaling overhead.

Referring to FIG. 12, FIG. 12 is a flow chart illustrating another method for executing a sensing service according to an embodiment of the disclosure.

As shown in FIG. 12, the method is executed by a network function. The method may include, but is not limited to, the following steps S121 to S123.

At step S121: first sensing service requests sent by at least one second device are received.

At step S122: in response to there being a plurality of first sensing service requests for sensing same sensing information of a same sensing object, a task corresponding to a first target sensing service request is executed, in which the first target sensing service request includes one or more of the plurality of first sensing service requests.

The relevant description of S121 to S122 may be referred to the relevant description in the above embodiments, and will not be repeated herein.

At step S123: in response to determining a sensing result, the sensing result is sent to the second device.

In an embodiment of the disclosure, the network function may determine the first device and the sensing data generation policy based on the first sensing service request. The first device may be a terminal and/or an access network device.

In an embodiment of the disclosure, in the case that the network function determines the first device and the sensing data generation policy, the network function may send a second sensing service request to the first device. The second sensing service request indicates to determine the sensing data of the sensing information of the sensing object using the sensing data generation policy.

It may be understood that the first target sensing service request may indicate obtaining sensing information from a plurality of sources. Based on this, when executing the task corresponding to the first target sensing service request, the network function may determine a plurality of first devices and the corresponding sensing data generation strategies, and send the corresponding second sensing service request to each first device respectively.

In some embodiments, in response to receiving the sensing data sent by the plurality of first devices, the network function determines the sensing result by fusing the sensing data.

In an embodiment of the disclosure, in the case that the network function receives the sensing data sent by the plurality of first devices, the network function determines the sensing result by fusing the sensing data.

In the case that the fusion mode indicated in the first sensing service request is fusion performed at the network function, the network function may determine the sensing result by fusing the sensing data sent by the plurality of first devices.

It may be understood that in the case that the first target sensing service request is sent by the second device, the network function may send the sensing result to the second device after determining the sensing result. In this case, the network function may send the sensing result to the second device via an NEF.

Further, in the case that there is a specific first sensing service request sent by the second device in addition to the first target sensing service request among the plurality of first sensing service requests, the network function, after determining the sensing result, may also send the sensing result to the second device that sends the specific first sensing service request. Thus, the second device that sends the specific first sensing service request may obtain the sensing result of the specific first sensing service request, so as to complete the sensing service.

In the implementation of embodiments of the disclosure, the network function receives the plurality of first sensing service requests sent by at least one second device. The plurality of first sensing service requests are configured to request for sensing the same sensing information of the same sensing object. In response to determining that there are the plurality of first sensing service requests for sensing the same sensing information of the same sensing object, the network function determines one first target sensing service request among the plurality of first sensing service requests and executes the task corresponding to the first target sensing service request. In response to determining the sensing result, the network function sends the sensing result to the second device. Thus, the plurality of first sensing service requests may be fused, and one or more first target sensing service requests may be executed to obtain the sensing result and send the sensing result to the second device, thereby reducing signaling overhead.

Referring to FIG. 13, FIG. 13 is a flow chart illustrating another method for executing a sensing service according to an embodiment of the disclosure.

As shown in FIG. 13, the method is executed by a first device. The method may include, but is not limited to, the following step S131.

At step S131: second sensing service request(s) sent by a network function is received, in which the second sensing service request(s) is sent by the network function upon determining that there are a plurality of first sensing service requests for sensing same sensing information of a same sensing object.

The network function may be a network function in a 5G core network, or may also be a network function in a future communication system, etc.

The sensing object may, for example, be an object, or an area, etc. The object may be, for example, a terminal. In the case that the sensing object is a terminal, sensing information of the sensing object, for example, may be a speed of the terminal, a position of the terminal, a movement trajectory of the terminal, a channel environment of the terminal, and etc.

In an embodiment of the disclosure, the first device may receive the second sensing service request(s) sent by the network function. The second sensing service request indicates to determine the sensing data of the sensing information of the sensing object using the sensing data generation policy.

In some embodiments, in response to receiving a plurality of second sensing service requests sent by the network function, and the plurality of second sensing service requests indicating to determine sensing data of same sensing information of a same sensing object using a same sensing data generation policy, the first device determines one second target sensing service request among the plurality of second sensing service requests, and executes a task corresponding to the second target sensing service request.

In an embodiment of the disclosure, in the case that the first device receives the plurality of second sensing service requests sent by the network function and the plurality of second sensing service requests indicate to determine the sensing data of the same sensing information of the same sensing object using the same sensing data generation policy, the first device may determine one second target sensing service request among the plurality of second sensing service requests and execute the task corresponding to the second target sensing service request.

In the case that the first device receives the plurality of second sensing service requests sent by the network function in a time period and the plurality of second sensing service requests indicate to determine the sensing data of the same sensing information of the same sensing object using the same sensing data generation policy, the first device may determine one second target sensing service request among the plurality of second sensing service requests and execute the task corresponding to the second target sensing service request.

It should be noted that the first device may determine a value of the time period based on a protocol agreement, or may also determine the value of the time period based on an indication from the access network device, which is not limited in embodiments of the disclosure.

In some embodiments, the first device determines, based on required Qos requirements of the plurality of second sensing service requests, a second sensing service request with the highest QoS requirements as the second target sensing service request. The second sensing service request includes the required Qos requirement.

In an embodiment of the disclosure, the first device may determine the required Qos requirements of the plurality of first sensing service requests, and select the first sensing service request with the highest QoS requirement as the second target sensing service request.

In an embodiment of the disclosure, the first device may select, based on an order of the second sensing service requests, a second sensing service request received first or a second sensing service request received last as the second target sensing service request.

In embodiments of the disclosure, the network function may select the second target sensing service request based on levels of senders of the second sensing service requests. For example, in the case that there are the plurality of second sensing service requests sent by the plurality of network functions, the plurality of network functions may have different levels, and the first device may select a second sensing service request sent by the network function with the highest or the lowest level as the second target sensing service request.

In some embodiments, the first device determines sensing data by executing the sensing service based on the sensing data generation policy.

In an embodiment of the disclosure, in the case that the first device receives the second sensing service request(s) sent by the network function, the first device may determine the sensing data by executing the sensing service based on the sensing data generation policy.

In some embodiments, the first device sends the sensing data to the network function.

In an embodiment of the disclosure, in the case that the first device determines the sensing data based on the second sensing service request, the first device may send the sensing data to the network function.

In some embodiments, the first device receives second indication information sent by the network function. The second indication information indicates a target first device for fusing sensing data measured by each first device.

In an embodiment of the disclosure, in the case that the first device receives the second sensing service request(s) sent by the network function, the first device may determine the sensing data by executing the sensing service based on the sensing data generation policy. In the case of receiving the second indication information sent by the network function indicating the target first device for fusing the sensing data measured by each first device, the first device may determine whether it is the target first device and whether the sensing data is required to be fused.

In some embodiments, in response to the first device being different from the target first device, the first device sends the sensing data to the target first device.

In an embodiment of the disclosure, in the case that the first device is different from the target first device, the first device may send the sensing data to the target first device.

In some embodiments, in response to the first device being the target first device and the sensing data being determined and receiving sensing data sent by other first devices, the first device determines a sensing result by fusing the sensing data.

In an embodiment of the disclosure, in the case that the first device is the target first device, and determines the sensing data and receives sensing data sent by other first devices, the first device may determine the sensing result by fusing the sensing data.

In some embodiments, the first device sends the sensing result to the network function.

In embodiments of the disclosure, the first device may send the sensing result to the network function after determining the sensing result.

When the first device sends the sensing result to the network function, the first device may send the sensing result to the network function by establishing a protocol data unit (PDU) session with the network function.

When the first device sends the sensing data to the network function, the first device may send the sensing data to the network function by establishing the PDU session with the network function.

A process of establishing the PDU session is as follows. A terminal sends a PDU session establishing request to an AMF via an AN. The AMF selects an SMF that provides services for the session, saves a correspondence between the SMF and the PDU session, and sends the PDU session establishing request to the SMF. The SMF selects a UPF for the terminal and establishes a user plane transmission path, and assigns an IP address to the terminal. The SMF may also initiate a policy control session establishing request to a PCF. The policy control session establishing request is used to establish a policy control session between the SMF and the PCF. During the process of establishing the policy control session, the SMF may save a correspondence between the policy control session and the PDU session. The AF may also establish an AF session with the PCF, and the PCF may bind the AF session to the policy control session and save a correspondence between the AF session and the policy control session.

In the implementation of embodiments of the disclosure, the first device receives the second sensing service request(s) sent by the network function. The second sensing service request indicates to determine the sensing data of the sensing information of the sensing object using the sensing data generation policy. The sensing data generation policy is determined by the network function based on one first target sensing service request among the plurality of first target sensing service requests. The plurality of first sensing service requests are configured for sensing the same sensing information of the same sensing object. Thus, the plurality of first sensing service requests may be fused and one or more first target sensing service requests may be executed, and signaling overhead may be reduced.

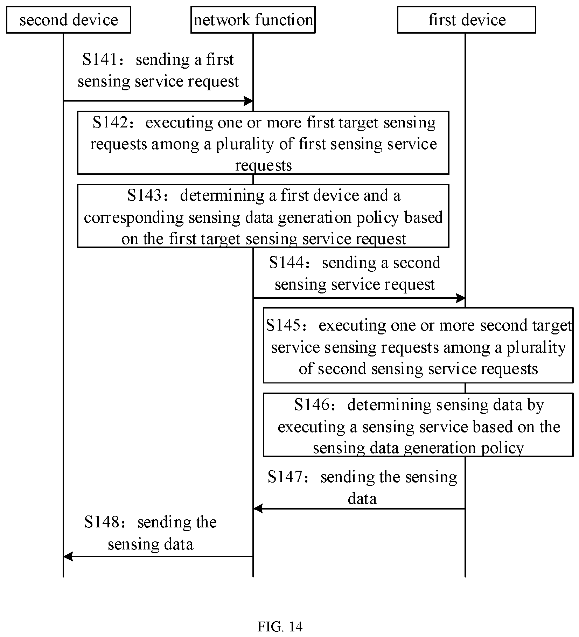

Referring to FIG. 14, FIG. 14 is a flow chart illustrating another method for executing a sensing service according to an embodiment of the disclosure.

As shown in FIG. 14, the method may include, but is not limited to, the following steps S141 to S148.

At step S141: the network function receives first sensing service requests sent by at least one second device.

At step S142: in response to there being a plurality of first sensing service requests for sensing same sensing information of a same sensing object, the network function executes a task corresponding to a first target sensing service request, in which the first target sensing service request includes one or more of the plurality of first sensing service requests.

At step S143: a first device and a corresponding sensing data generation policy are determined based on the first target sensing service request.

At step S144: a second sensing service request is sent to the first device, in which the second sensing service request indicates to determine sensing data of the sensing information of the sensing object using the sensing data generation policy.

At step S145: in response to receiving a plurality of second sensing service requests sent by the network function, and the plurality of second sensing service requests indicating to determine sensing data of the same sensing information of the same sensing object using a same sensing data generation policy, the first device executes a task corresponding to a second target sensing service request, in which the second target sensing service request includes one or more of the plurality of second sensing service requests.

At step S146: the first device determines sensing data by executing the sensing service based on the sensing data generation policy.

At step S147: the first device sends the sensing data to the network function.

At step S148: in response to receiving the sensed data, the network function sends the sensing data to the second device.

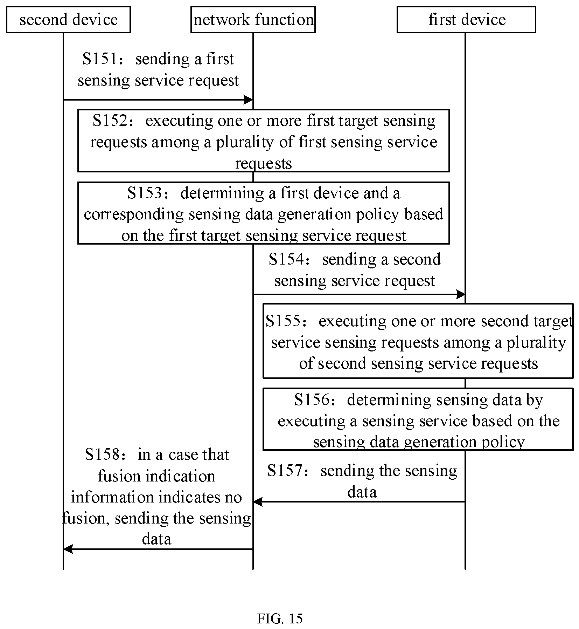

Referring to FIG. 15, FIG. 15 is a flow chart illustrating another method for executing a sensing service according to an embodiment of the disclosure.

As shown in FIG. 15, the method may include, but is not limited to, the following steps S151 to S158.

At step S151: the network function receives first sensing service requests sent by at least one second device.

At step S152: in response to there being a plurality of first sensing service requests for sensing same sensing information of a same sensing object, the network function executes a task corresponding to a first target sensing service request, in which the first target sensing service request includes one or more of the plurality of first sensing service requests.

At step S153: a first device and a corresponding sensing data generation policy are determined based on the first target sensing service request.

At step S154: a second sensing service request is sent to the first device, in which the second sensing service request indicates to determine sensing data of the sensing information of the sensing object using the sensing data generation policy.

At step S155: in response to receiving a plurality of second sensing service requests sent by the network function, and the plurality of second sensing service requests indicating to determine sensing data of the same sensing information of the same sensing object using a same sensing data generation policy, the first device executes a task corresponding to a second target sensing service request, in which the second target sensing service request includes one or more of the plurality of second sensing service requests.

At step S156: the first device determines sensing data by executing the sensing service based on the sensing data generation policy.

At step S157: the first device sends the sensing data to the network function.

At step S158: in response to receiving the sensing data, and the first target sensing service request including the first indication information and the first indication information indicating no fusion, the network function sends the sensing data to the second device.

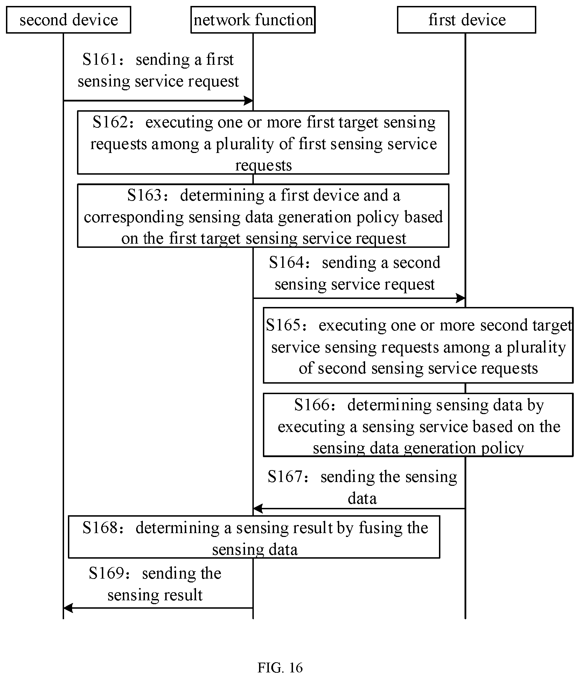

Referring to FIG. 16, FIG. 16 is a flow chart illustrating another method for executing a sensing service according to an embodiment of the disclosure.

As shown in FIG. 16, the method may include, but is not limited to, the following steps S161 to S169.

At step S161: the network function receives first sensing service requests sent by at least one second device.

At step S162: in response to there being a plurality of first sensing service requests for sensing same sensing information of a same sensing object, the network function executes a task corresponding to a first target sensing service request, in which the first target sensing service request includes one or more of the plurality of first sensing service requests.

At step S163: a first device and a corresponding sensing data generation policy are determined based on the first target sensing service request.

At step S164: a second sensing service request is sent to the first device, in which the second sensing service request indicates to determine sensing data of the sensing information of the sensing object using the sensing data generation policy.

At step S165: in response to receiving a plurality of second sensing service requests sent by the network function, and the plurality of second sensing service requests indicating to determine sensing data of the same sensing information of the same sensing object using a same sensing data generation policy, the first device executes a task corresponding to a second target sensing service request, in which the second target sensing service request includes one or more of the plurality of second sensing service requests.

At step S166: the first device determines sensing data by executing the sensing service based on the sensing data generation policy.

At step S167: the first device sends the sensing data to the network function.

At step S168: in response to receiving the sensing data sent by a plurality of first devices, the network function determines a sensing result by fusing the sensing data.

At step S169: in response to determining the sensing result, the network function sends the sensing result to the second device.

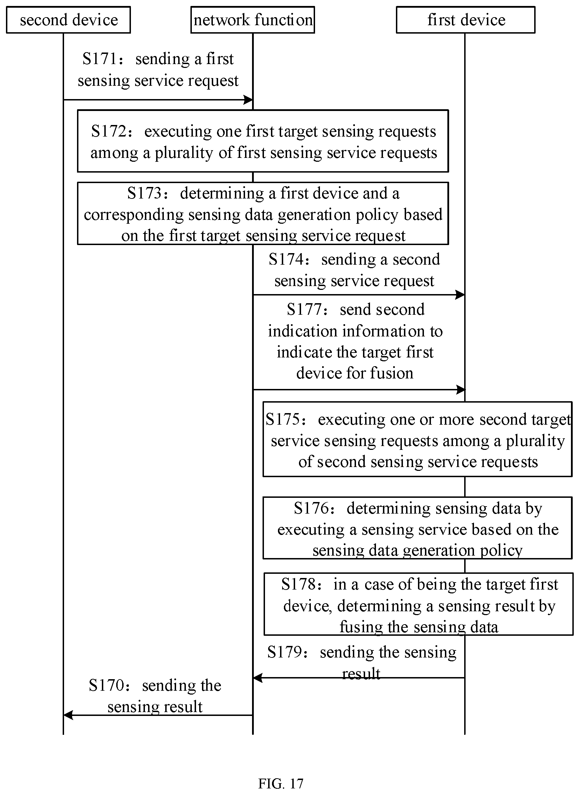

Referring to FIG. 17, FIG. 17 is a flow chart illustrating another method for executing a sensing service according to an embodiment of the disclosure.

As shown in FIG. 17, the method may include, but is not limited to, the following steps S171 to S170.

At step S171: the network function receives first sensing service requests sent by at least one second device.

At step S172: in response to there being a plurality of first sensing service requests for sensing same sensing information of a same sensing object, the network function executes a task corresponding to a first target sensing service request, in which the first target sensing service request includes one or more of the plurality of first sensing service requests.

At step S173: a first device and a corresponding sensing data generation policy are determined based on the first target sensing service request.

At step S174: a second sensing service request is sent to the first device, in which the second sensing service request indicates to determine sensing data of the sensing information of the sensing object using the sensing data generation policy.

At step S175: in response to receiving a plurality of second sensing service requests sent by the network function, and the plurality of second sensing service requests indicating to determine sensing data of the same sensing information of the same sensing object using a same sensing data generation policy, the first device executes a task corresponding to a second target sensing service request, in which the second target sensing service request includes one or more of the plurality of second sensing service requests.

At step S176: the first device determines sensing data by executing the sensing service based on the sensing data generation policy.

At step S177: The first device receives second indication information sent by the network function, in which the second indication information indicates a target first device for fusing sensing data measured by each first device.

At step S178: in response to the first device being the target first device and the sensing data being determined and receiving sensing data sent by other first devices, the first device determines a sensing result by fusing the sensing data.

At step S179: the first device sends the sensing result to the network function.

At step S170: in response to receiving the sensing result, the network function sends the sensing result to the second device.

In embodiments of the disclosure, the method for executing a sensing service provided in embodiments of the disclosure is illustrated in FIG. 14 to FIG. 17 above with an interaction of the network function with the first device. The steps executed by the network function and the first device are respectively illustrated in the embodiments described above, and may be referred to the relevant description in the embodiments described above, and will not be repeated herein.

In an embodiment of the disclosure, when multiple sensing service requestors want to get sensing information about a target object or area, they will send Sensing Service requests to 5GC, which may include target object/area and required QoS, etc.

After receiving multiple sensing requests, the 5GC NF recognizes there are concurrent sensing requests for the same object and/or area and then checks the privacy setting and QoS requirement of these requests.

If allowed by the privacy setting and QoS requirement, the 5GC NF may combine the concurrent sensing requests by executing one of the requests and using the ensuing sensing information to satisfy the other requests without fully executing the latter.

The 5GC NF determines sensing mode, transmitter, receiver, sensing information processing mode and transferring method for sensing services and generates policies for transmitter(s) and receiver(s) and then provides them to the UE(s) and/or gNB(s) selected to perform sensing operation.

The UE and/or gNB may also perform sensing service request combination provided QoS requirements for the non-executed sensing request can be satisfied.

When UP-based sensing information transferring method is used, a PDU session between the receiver (UE or gNB) and 5GC NF will be established for sensing information transmission.

Sensing service is performed, and the sensing result is notified to the 5GC NF.

The 5GC NF notifies the sensing result to the Sensing Service Requestors.

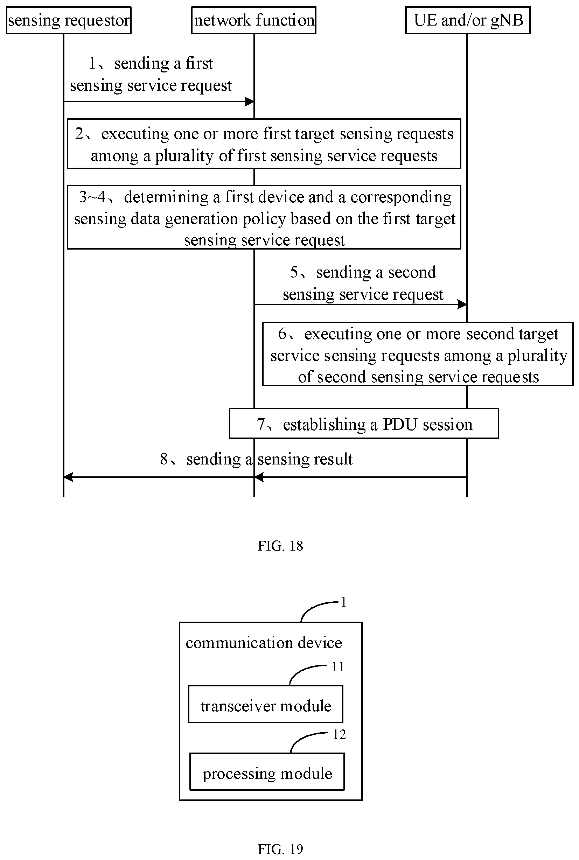

As shown in FIG. 18, in an embodiment of the disclosure, a method for executing a sensing service provided in embodiments of the disclosure is illustrated using a first device as a UE and/or a gNB as an example.
1. Sensing requestors initiate multiple sensing service requests to 5GC NF. The sensing service request may be sent via a NEF. The service requests include target object and/or area for sensing, required QoS and one or more of following information: request on sensing information from multiple sources; direct indication of fusion request; or fusion mode preference.
   Note: the sensing requestor may be a 5GC NF, AF outside 5GC or external client. For AF(s) outside 5GC and external client, the sensing service request will be sent via a NEF.
2. The 5GC NF recognizes concurrent sensing requests for the same object/area. If allowed by the QoS requirements and privacy settings, the 5GC NF may combine the concurrent sensing service requests by executing one of the requests and using the ensuing sensing information to satisfy the other requests without fully executing the latter.

NOTE: concurrent Sensing requests occur when any of the 5GC NFs are in one of the following cases.

Case A: receives/initiates multiple sensing requests for sensing the same target object and/or area within a time period.

Case B: receives/initiates one or more new sensing request(s) for sensing the same target object and/or area during the sensing session to support the old sensing request(s).

Note: Besides privacy setting and QoS requirements, other factors may also be considered when combining the concurrent sensing service requests, e.g., sensing node, fusion mode preference, etc.

3. The 5GC NF determines sensing mode and selects transmitter(s) and receiver(s) for the sensing service.

4. The 5GC NF determines sensing information processing mode and whether to transfer sensing information over control plane or use plane based on UE/gNB/network capability and Sensing Application requirements (e.g. QoS, including delay and accuracy).

5. The 5GC NF generates policies for transmitter(s) and receiver(s) and provides them to the UE(s) and/or gNB(s) selected at step 3.

6. The UE(s)/gNB(s) may also combine the concurrent sensing requests based on the QoS requirements.

7. When UP-based sensing information transferring method is selected in step 4, a PDU session between the receiver (UE or gNB) and 5GC NF will be established for sensing information transmission.

8. Sensing service is performed, and the sensing result is notified to the 5GC NF.

The 5GC NF notifies the sensing result to the Sensing Application server. The sensing result may be sent via a NEF to the Sensing Application server.

In an embodiment of the disclosure, signaling for sensing service is reduced by combing concurrent sensing requests for the same object or area.

In the above embodiments provided in the disclosure, the methods provided in the embodiments of the disclosure are described from the perspectives of the network function, the first device, and the interaction between the network function and the first device, respectively.

FIG. 19 is a block diagram illustrating a communication device 1 according to an embodiment of the disclosure. The communication device 1 shown in FIG. 19 may include a transceiver module 11 and a processing module 12. The transceiver module 11 may include a transmitting module and/or a receiving module, the transmitting module is for realizing a transmitting function, and the receiving module is for realizing a receiving function, and the transceiver module 11 may realize the transmitting function and/or the receiving function.

In a case that the communication device 1 is a network function, the communication device 1 includes a processing module 12.

The processing module 12 is configured to, in response to there being a plurality of first sensing service requests for sensing same sensing information of a same sensing object, execute a task corresponding to a first target sensing service request, in which the first target sensing service request includes one or more of the plurality of first sensing service requests.

In some embodiments, the processing module 12 is further configured to, in response to the plurality of first sensing service requests satisfying a first condition, execute the task corresponding to the first target sensing service request, in which the first condition includes at least one of: sensing information of sensing objects in the plurality of first sensing service requests all satisfying a privacy setting requirement, data processing methods indicated by the plurality of first sensing service requests being identical, or first devices indicated by the plurality of first sensing service requests being identical.

In some embodiments, the processing module 12 is further configured to determine, based on required Qos requirements of the plurality of first sensing service requests, a first sensing service request with the highest QoS requirements as the first target sensing service request, in which the first sensing service request includes the required Qos requirements.

In some embodiments, the processing module 12 is further configured to determine the first target sensing service request based on QoS requirements of the plurality of first sensing service requests; or select one or more from the plurality of first sensing service requests randomly as the first target sensing service request; or determine the first target sensing service request based on time information of the plurality of first sensing service requests.

In some embodiments, the processing module 12 is further configured to determine a first sensing service request with the highest QoS requirement among the plurality of first sensing service requests as the first target sensing service request.

In some embodiments, the processing module 12 is further configured to determine a first sensing service request with the earliest transmission time or the earliest generation time among the plurality of first sensing service requests as the first target sensing service request; or determine a first sensing service request with the latest transmission time or the latest generation time among the plurality of first sensing service requests as the first target sensing service request.

In some embodiments, the processing module 12 is further configured to determine a first device and a corresponding sensing data generation policy based on the first target sensing service request.

In some embodiments, the device further includes a transceiver module 11.

The transceiver module 11 is configured to send a second sensing service request to the first device, in which the second sensing service request indicates to determine sensing data of the sensing information of the sensing object using the sensing data generation policy.

In some embodiments, the transceiver module 11 is further configured to receive sensing data sent by the first device, in which the sensing data is determined by the first device base on the second sensing service request.

In some embodiments, the processing module 12 is further configured to, in response to receiving sensing data sent by a plurality of first devices, determine a sensing result by fusing the sensing data.

In some embodiments, the transceiver module 11 is further configured to receive the sensing data sent by the plurality of first devices; the processing module 12 is further configured to determine the sensing result based on the sensing data sent by the plurality of first devices.

In some embodiments, the first target sensing service request includes at least one of: device information for executing the sensing service, in which the device information for executing the sensing service indicates the first device; or first indication information, in which the first indication information indicates fusion of sensing data from different first devices.

In some embodiments, the processing module 12 is further configured to, when the first target sensing service request includes the device information for executing the sensing service, determine, determine a plurality of first devices and the sensing data generation policy corresponding to each first device based on the first target sensing service request.

In some embodiments, the first indication information further indicates at least one of: fusion at the network function; fusion at the first device; or no fusion.

In some embodiments, the transceiver module 11 is further configured to, when the first target sensing service request includes the first indication information and the first indication information indicates fusion at the first device, send second indication information to the first device, in which the second indication information indicates a target first device for fusing sensing data measured by each first device; and the target first device includes one or more of the first devices.

In some embodiments, the processing module 12 is further configured to, in response to the first target sensing service request including the first indication information and the first indication information indicating fusion at the network function, and receiving the sensing data sent by the first devices, determine a sensing result by fusing the sensing data.

In some embodiments, the transceiver module 11 is further configured to receive one or more first sensing service requests sent by at least one second device, in which the plurality of first sensing service requests are configured to request for sensing same sensing information of a same sensing object.

In some embodiments, the transceiver module 11 is further configured to receive the plurality of first sensing service requests sent by the at least one second device via an NEF.

In some embodiments, the transceiver module 11 is further configured to, in response to receiving sensing data, send the sensing data to the second device; or in response to receiving sensing data, and the first target sensing service request including the first indication information and the first indication information indicating no fusion, send the sensing data to the second device; or in response to receiving a sensing result, send the sensing result to the second device; or in response to determining a sensing result based on received sensing data, send the sensing result to the second device.

In some embodiments, the transceiver module 11 is further configured to send the sensing data or the sensing result to the second device via the NEF.

In some embodiments, the first device includes a terminal and/or an access network device.

In a case that the communication device 1 is a first device, in some embodiments, the communication device 1 includes a transceiver module 11 and a processing module 12.

The transceiver module 11 is configured to receive second sensing service request(s) sent by a network function, in which the second sensing service request(s) indicates to determine the sensing data of the sensing information of the sensing object using the sensing data generation policy; the sensing data generation policy is determined by the network function based on one first target sensing service request among the plurality of first target sensing service requests; and the plurality of first sensing service requests are configured for sensing the same sensing information of the same sensing object.

In some embodiments, the device further includes the processing module 12.

The processing module 12 is configured to, in response to receiving a plurality of second sensing service requests sent by the network function, and the plurality of second sensing service requests indicating to determine sensing data of the same sensing information of the same sensing object using a same sensing data generation policy, execute a task corresponding to a second target sensing service request, in which the second target sensing service request includes one or more of the plurality of second sensing service requests; and determine sensing data by executing the sensing service based on the sensing data generation policy.

In some embodiments, the transceiver module 11 is further configured to send the sensing data to the network function.

In some embodiments, the transceiver module 11 is further configured to receive second indication information sent by the network function, in which the second indication information indicates a target first device for fusing sensing data measured by each first device.

In some embodiments, the transceiver module 11 is further configured to, in response to the first device being different from the target first device, send the sensing data to the target first device.

In some embodiments, the processing module 12 is further configured to, in response to the first device being the target first device, the sensing data being determined and receiving sensing data sent by other first devices, determine a sensing result by fusing the sensing data.

In some embodiments, the transceiver module 11 is further configured to send the sensing result to the network function.

In some embodiments, the transceiver module 11 is further configured to establish a PDU session with the network function, and send the sensing data or the sensing result to the network function via the PDU session.

For the communication device 1 in the above embodiments, the specific manner in which each module performs an operation has been described in detail in the embodiments relating to the method, which will not be described in detail herein.

The communication device 1 provided in the above embodiments of the disclosure achieves the same or similar beneficial effects as the method for executing a sensing service provided in some of the above embodiments, and will not be repeated herein.

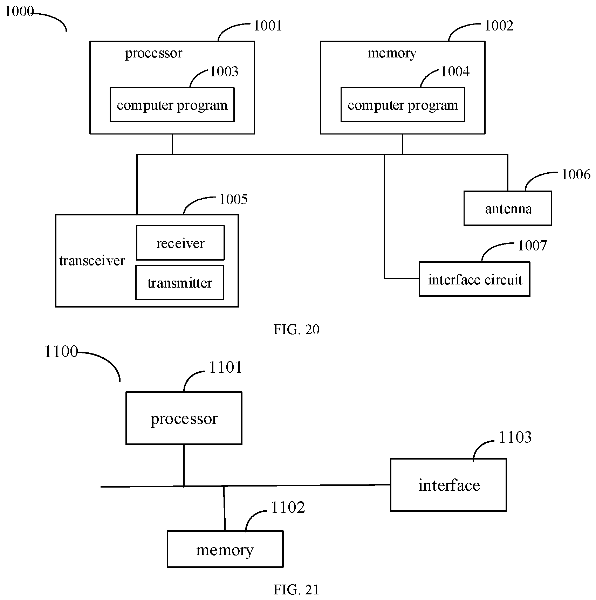

FIG. 20 is a block diagram illustrating another communication device 1000 according to an embodiment of the disclosure. The communication device 1000 may be a network function, a first device, a chip, a system on chip or a processor that supports the network function to implement the method, or a chip, a system on chip or a processor that supports the first device to implement the method. The device 1000 may be configured to implement the method described in the method embodiments. For details, please refer to descriptions in the method embodiments.

The communication device 1000 may include one or more processors 1001. The processor 1001 may be a general purpose processor or a dedicated processor. For example, the processor 1001 may be a baseband processor or a central processor. The baseband processor may be configured to process a communication protocol and communication data, and the central processor may be configured to control a communication device (e.g., a network side device, a baseband chip, a terminal, a terminal chip, a DU or CU, etc.), to execute a computer program, and process data of the computer program.

Optionally, the communication device 1000 may further include one or more memories 1002 with a computer program 1004 stored thereon. The memory 1002 executes the computer program 1004 so that the communication device 1000 performs the method as described in the above method embodiments. Optionally, the memory 1002 may further store data. The communication device 1000 and the memory 1002 may be independently configured or integrated together.

Optionally, the communication device 1000 may further include a transceiver 1005 and an antenna 1006. The transceiver 1005 may be referred to as a transceiver unit, a transceiver machine or a transceiver circuit, which may be configured to achieve a transceiving function. The transceiver 1005 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the communication device 1000 may further include one or more interface circuits 1007. The interface circuit 1007 is configured to receive code instructions and transmit the code instructions to the processor 1001. The processor 1001 runs the code instructions so that the communication device 1000 performs the method according to the above method embodiment.

In the case that the communication device 1000 is a network function, the processor 1001 is configured to execute step S31 in FIG. 3; step S41 in FIG. 4; steps S51 and S52 in FIG. 5; steps S61 and S62 in FIG. 6; steps S71 and S72 in FIG. 7; step S82 in FIG. 8; step S92 in FIG. 9; step S102 in FIG. 10; step S112 in FIG. 11; step S122 in FIG. 12; steps S142 and S143 in FIG. 14; steps S152 and S153 in FIG. 15; steps S162, S163, and S168 in FIG. 16; steps S172 and S173 in FIG. 17, and the transceiver 1005 is configured to execute step S53 in FIG. 5; steps S63 and S64 in FIG. 6; steps S73 and S74 in FIG. 7; step S81 in FIG. 8; steps S91 and S93 in FIG. 9; steps S101 and S103 in FIG. 10; steps S111 and S113 in FIG. 11; steps S121 and S123 in FIG. 12; steps S141, S144, S147, and S148 in FIG. 14; steps S151, S154, S157, and S158 in FIG. 15; steps S161, S164, S167, and S169 in FIG. 16; steps S171, S174, S177, S179, and S170 in FIG. 17.

In the case that the communication device 1000 is the first device, the transceiver 1005 is configured to execute step S131 in FIG. 13; steps S144, S147, and S148 in FIG. 14; steps S154 and S157 in FIG. 15; steps S164 and S167 in FIG. 16; steps S174, S177, and S179 in FIG. 17; the processor 1001 is configured to execute steps S145 and S146 in FIG. 14; steps S155 and S156 in FIG. 15; steps S165 and S166 in FIG. 16; steps S175, S176, and S178 in FIG. 17.

In an implementation, the processor 1001 may include a transceiver configured to implement receiving and transmitting functions. For example, the transceiver may be a transceiver circuit, or an interface, or an interface circuit. The transceiverg circuit, the interface or the interface circuit configured to implement receiving and transmitting functions may be separate or integrated together. The transceiver circuit, the interface or the interface circuit may be configured to read and write codes/data, or the transceiver circuit, the interface or the interface circuit may be configured to transmit or deliver a signal.

In an implementation, the processor 1001 may be stored with a computer program 1003. The computer program 1003 runs on the processor 1001 so that the communication device 1000 performs the method as described in the above method embodiments. The computer program 1003 may be solidified in the processor 1001, in which case the processor 1001 may be implemented by a hardware.

In an implementation, the communication device 1000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a terminal or a network side device, but the scope of the communication device described in the disclosure is not limited thereto, and a structure of the communication device may not be subject to FIG. 20. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

In the case that the communication device may be a chip or a system on chip, please refer to FIG. 21, which is a block diagram of a chip provided in an embodiment of the disclosure.

The chip 1100 includes a processor 1101 and an interface 1103, in which the number of processors 1101 may be one or more and the number of interfaces 1103 may be more than one.

For the case where the chip is used to implement the functionality of the network function in embodiments of the disclosure:
the interface 1103 is configured for receiving code instructions and sending the code instructions to the processor;
the processor 1101 is configured for running the code instructions to perform the method for executing a sensing service as described in some embodiments above.

For the case where the chip is used to implement the functionality of the first device in embodiments of the disclosure:
the interface 1103 is configured for receiving code instructions and sending the code instructions to said processor;
the processor 1101 is configured for running the code instructions to perform the method for executing a sensing service as described in some embodiments above.

Optionally, the chip 1100 further includes a memory 1102, configured to save necessary computer program and data.

Those skilled in the related art may understand that, various illustrative logical blocks and steps listed in embodiments of the disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

A system for executing a sensing service is further provided in embodiments of the disclosure. The system includes a communication device as a network function and a communication device as a first device in the preceding embodiment of FIG. 19, or, alternatively, the system includes a communication device as a network function and a communication device as a first device in the preceding embodiment of FIG. 20.

A readable storage medium with instructions stored thereon is further provided in the disclosure. When the instructions are executed by a computer, steps in e any method embodiment are implemented.

A computer program product is further provided in the disclosure. The computer program product implements functions of any method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D" , and there is no order of precedence or magnitude between technical features described in "first" , "second" , "third" , "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Therefore, the protection scope of the disclosure shall be subject to the protection scope of claims.

## Claims

1. A method for executing a sensing service, executed by a network function, comprising:
in response to there being a plurality of first sensing service requests for sensing same sensing information of a same sensing object, executing a task corresponding to a first target sensing service request, wherein the first target sensing service request comprises one or more of the plurality of first sensing service requests.

2. The method according to claim 1, further comprising:
in response to the plurality of first sensing service requests satisfying a first condition, executing the task corresponding to the first target sensing service request, wherein the first condition comprises at least one of: sensing information of sensing objects in the plurality of first sensing service requests all satisfying a privacy setting requirement, data processing methods indicated by the plurality of first sensing service requests being identical, or first devices indicated by the plurality of first sensing service requests being identical.

3. The method according to claim 1 or 2, further comprising at least one of:
determining the first target sensing service request based on quality of service (QoS) requirements of the plurality of first sensing service requests; or
selecting one or more from the plurality of first sensing service requests randomly as the first target sensing service request; or
determining the first target sensing service request based on time information of the plurality of first sensing service requests.

4. The method according to claim 3, wherein determining the first target sensing service request based on the QoS requirements of the plurality of first sensing service requests comprises:
determining a first sensing service request with a highest QoS requirement among the plurality of first sensing service requests as the first target sensing service request.

5. The method according to claim 3, wherein determining the first target sensing service request based on the time information of the plurality of first sensing service requests comprises:
determining a first sensing service request with an earliest transmission time or an earliest generation time among the plurality of first sensing service requests as the first target sensing service request; or
determining a first sensing service request with a latest transmission time or a latest generation time among the plurality of first sensing service requests as the first target sensing service request.

6. The method according to any one of claims 1 to 5, further comprising:
determining a first device based on the first target sensing service request; and
sending a second sensing service request to the first device.

7. The method according to claim 6, wherein
a sensing data generation policy is determined based on the first target sensing service request, wherein the second sensing service request indicates to determine sensing data of the sensing information of the sensing object using the sensing data generation policy.

8. The method according to claim 6 or 7, wherein after sending the second sensing service request to the first device, the method comprises:
receiving sensing data sent by the first device.

9. The method according to claim 8, further comprising:
receiving sensing data sent by a plurality of first devices; and
determining a sensing result based on the sensing data sent by the plurality of first devices.

10. The method according to claim 6 or 7, wherein after sending the second sensing service request to the first device, the method comprises:
receiving a sensing result sent by a target first device, wherein the target first device comprises one or more of the plurality of first devices; and the sensing result is obtained by the target first device through fusing sensing data measured by each first device.

11. The method according to any one of claims 6 to 10, wherein the first target sensing service request comprises at least one of:
device information of the first device; or
first indication information, wherein the first indication information indicates fusion of sensing data from different first devices.

12. The method according to claim 11, wherein the first indication information further indicates at least one of:
fusion at the network function;
fusion at the first device; or
no fusion.

13. The method according to claim 12, further comprising:
sending second indication information to the first device, wherein the second indication information indicates the first device to fuse the sensing data measured by each first device.

14. The method according to claim 13, wherein in response to there being a plurality of first devices, sending the second indication information to the first device comprises:
determining a target device from the plurality of first devices, wherein the target device is configured to fuse the sensing data measured by each first device.

15. The method according to claim 12, further comprising:
in response to the first target sensing service request comprising the first indication information and the first indication information indicating fusion at the network function, and receiving the sensing data sent by the first device, determining a sensing result by fusing the sensing data.

16. The method according to any one of claims 1 to 15, further comprising:
receiving the first sensing service requests sent by at least one second device.

17. The method according to claim 16, wherein the receiving the first sensing service requests sent by the at least one second device comprises:
receiving the first sensing service requests sent by the at least one second device via a network exposure function (NEF).

18. The method according to claim 16 or 17, further comprising:
in response to receiving sensing data, sending the sensing data to the second device; or
in response to receiving sensing data, and the first target sensing service request comprising the first indication information and the first indication information indicating no fusion, sending the sensing data to the second device; or
in response to receiving a sensing result, sending the sensing result to the second device; or
in response to determining a sensing result based on received sensing data, sending the sensing result to the second device.

19. The method according to claim 18, wherein sending the sensing data or the sensing result to the second device comprises:
sending the sensing data or the sensing result to the second device via the NEF.

20. The method according to any one of claims 6 to 15, wherein the first device comprises a terminal and/or an access network device.

21. A method for executing a sensing service, executed by a first device, comprising:
receiving second sensing service request(s) sent by a network function, wherein the second sensing service request(s) is sent by the network function upon determining that there are a plurality of first sensing service requests for sensing same sensing information of a same sensing object.

22. The method according to claim 21, further comprising:
in a case where there is a plurality of second sensing service requests, and the plurality of second sending service requests indicate to determine sensing data of the same sensing information of the same sensing object using a same sensing data generation policy, executing a task corresponding to a second target sensing service request, wherein the second target sensing service request comprises one or more of the plurality of second sensing service requests.

23. The method according to claim 22, further comprising:
determining a second target sensing service request with a highest quality of service (QoS) requirement among the plurality of second sensing service requests based on QoS requirements required by the plurality of second sensing service requests.

24. The method according to any one of claims 21 to 23, further comprising:
determining sensing data by executing the sensing service based on the sensing data generation policy.

25. The method according to claim 24, further comprising:
sending the sensing data to the network function.

26. The method according to claim 24, further comprising:
receiving second indication information sent by the network function, wherein the second indication information indicates a target first device for fusing sensing data measured by each first device.

27. The method according to claim 26, further comprising:
in response to the first device being different from the target first device, sending the sensing data to the target first device.

28. The method according to claim 26, further comprising:
in response to the first device being the target first device, determining the sensing data and receiving sensing data sent by other first devices, determining a sensing result by fusing the sensing data.

29. The method according to claim 28, further comprising:
sending the sensing result to the network function.

30. The method according to claim 25 or 29, wherein sending the sensing data or the sensing result to the network function comprises:
establishing a protocol data unit (PDU) session with the network function, and sending the sensing data or the sensing result to the network function via the PDU session.

31. A communication device, comprising:
a processing module, configured to, in response to there being a plurality of first sensing service requests for sensing same sensing information of a same sensing object, execute a task corresponding to a first target sensing service request, wherein the first target sensing service request comprises one or more of the plurality of first sensing service requests.

32. A communication device, comprising:
a transceiver module, configured to receive second sensing service request(s) sent by a network function, wherein the second sensing service request(s) is sent by the network function upon determining that there are a plurality of first sensing service requests for sensing same sensing information of a same sensing object.

33. A communication device, comprising a processor and a memory, wherein the memory stores a computer program, which, when executed by the processor, cause the device to implement the method according to any one of claims 1 to 20, or to implement the method according to any one of claims 21 to 30.

34. A communication device, comprising a processor and an interface circuit;
wherein the interface circuit is configured to receive code instructions and transmit the code instructions to the processor; and
the processor is configured to execute the code instructions to implement the method according to any one of claims 1 to 20, or to implement the method according to any one of claims 21 to 30.

35. A computer-readable storage medium, configured to store instructions, wherein when the instructions are executed, the method of any one of claims 1 to 20 or the method of any one of claims 21 to 30 is implemented.
